(19) Europäisches Patentamt
European Patent Office
Office européen des brevets

(11) **EP 4 540 931 B1**

(12) **EUROPEAN PATENT SPECIFICATION**

(45) Date of publication and mention
of the grant of the patent:
**13.08.2025  Bulletin 2025/33**

(21) Application number: **22818443.8**

(22) Date of filing: **22.11.2022**

(51) International Patent Classification (IPC):
**H04B 7/185** $^{(2006.01)}$

(52) Cooperative Patent Classification (CPC):
**H04B 7/18506**

(86) International application number:
**PCT/EP2022/082740**

(87) International publication number:
**WO 2024/046593 (07.03.2024 Gazette 2024/10)**

(54) **AIRCRAFT COLLISION AVOIDANCE METHOD AND DEVICE**

VERFAHREN UND VORRICHTUNG ZUR VERMEIDUNG VON FLUGZEUGKOLLISIONEN

PROCÉDÉ ET DISPOSITIF D'ÉVITEMENT DE COLLISION D'AÉRONEF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **02.09.2022  PCT/EP2022/074515**

(43) Date of publication of application:
**23.04.2025  Bulletin 2025/17**

(73) Proprietor: **FLARM Technology AG
6300 Zug (CH)**

(72) Inventors:
 • **MÄDER, Urban
   8925 Ebertswil (CH)**
 • **KAUFMANN, Thomas
   8908 Hedingen (CH)**
 • **TARDELLI, Matteo
   6362 Stansstaad (CH)**

(74) Representative: **E. Blum & Co. AG
Franklinturm
Hofwiesenstrasse 349
8050 Zürich (CH)**

(56) References cited:
   **WO-A1-2023/030641      US-A- 5 450 329
   US-A1- 2021 035 454**

 • **VARGA MIHALY ET AL: "ADS-B based real-time air traffic monitoring system", 2015 38TH INTERNATIONAL CONFERENCE ON TELECOMMUNICATIONS AND SIGNAL PROCESSING (TSP), IEEE, 9 July 2015 (2015-07-09), pages 215 - 219, XP032792287, DOI: 10.1109/TSP.2015.7296255**

## Description

Technical Field

The invention relates to a device, method, and system for wirelessly broadcasting information pertaining to an aircraft for traffic awareness and collision avoidance.

Background Art

Every year, a substantial number of VFR (visual flight rules) aircraft are involved in mid-air collisions. Unfortunately, half of these incidents are fatal. Surprisingly, most of these accidents happen in good visibility and during daylight conditions.

Accident investigations have shown that the VFR-principle of "see and avoid" is insufficient, as it is often nearly impossible to see the other aircraft. The human visual system is not well suited for objects on a collision course, because these are on a fixed vector from the aircraft, i.e. the image of a foreign aircraft does not "move" on the pilot's retina. Other biological, physiological, and psychological effects ("human factors") as well as limited cockpit visibility in a typical General Aviation aircraft further decrease the chance of seeing the other aircraft early enough to avoid a mid-air collision.

Traditional FLARM as well as newer PowerFLARM devices (see, e.g. https://flarm.com/wp-content/uploads/man/FLARM-General-EN.pdf as accessed on 2021-02-05) work by calculating and broadcasting their own future flight paths to nearby aircraft together with a unique identifier. At the same time, they receive the future flight paths from surrounding aircraft. All these values are stored in broadcasted data packets. Then, an intelligent motion prediction algorithm calculates a collision risk for each aircraft. When a collision probability exceeds a threshold, the pilots are alerted with the relative position of the other aircraft, enabling them to avoid the collision.

Besides issuing collision warnings, FLARM devices can also show nearby aircraft on an overview screen showing surrounding airspace. This helps pilots to detect the other aircraft and perform an evasive maneuver before a collision warning becomes necessary.

VARGA MIHALY et al.: "ADS-B based real-time air traffic monitoring system", 38th International Conference on Telecommunications and Signal Processing (TSP), IEEE, 9 July 2015, pages 215-219 discloses an implementation of an Automatic Dependent Surveillance-Broadcast (ADS-B) based real time air traffic monitoring and tracking system.

US 2021/0035454 A1 discloses a remote identification device and method for unmanned aircrafts.

US 2013/0036238 A1 discloses methods and systems for compressing location data of a mobile radio for over-the-air transmission to a stationary receiver.

US 5,450,329 discloses a vehicle location system and method whereby a relative position in a grid segment determines a time slot of the transmission of a radio packet in order to avoid interference.

However, the amount of broadcasted information is restricted with these prior art devices, their accuracy is rather coarse, and/or application scenarios are limited.

Disclosure of the Invention

The problem to be solved by the present invention is therefore to at least in part overcome these shortcomings of prior art solutions.

This problem is solved by the devices and methods of the independent claims.

Accordingly, a broadcast device for wirelessly broadcasting information pertaining to a first aircraft comprises a positioning device (e.g. a GNSS receiver such as a GPS receiver, a GLONASS receiver, and/or a Galileo receiver) configured to determine position data PD1 which is indicative of a position P1 of the broadcast device or - if the broadcast device is mounted to, affixed at, or situated in or at the aircraft or a pilot onboard the aircraft - of the aircraft. The position data PD1 comprises latitude data PD1_LAT indicative of a latitude, longitude data PD1_LON indicative of a longitude and advantageously altitude data PD1_ALT indicative of an altitude of the broadcast device. The position data PD1 can optionally at least in part be determined and/or enhanced from on-board navigational systems of the aircraft such as a barometric pressure sensor, a magnetic sensor, an acceleration sensor, an inertial navigation system, etc., e.g. to increase the altitude precision which can be rather poor for typical GNSS devices without correction. In such a case, the combined GNSS receiver together with the additional sensor/system as well as any data fusion logics involved qualifies as "positioning device" according to the invention.

The broadcast device further comprises a control unit (such as a microcontroller with a memory) which is configured to receive the position data PD1 from the positioning device, preferably via an internal bus such as a serial or an I2C bus, and advantageously store it in the memory (typically as short-term storage in a volatile memory such as RAM). Thus, the control unit can further process the position data PD1, e.g. use it for determining compressed position data PD1' which is later added to a to-be-broadcasted data packet (see below).

The position data PD1 and/or the compressed position data PD1' are advantageously encoded as an integral data type (e.g. with an example value of 5312) indicative of a multiple of a specific fraction of a degree (e.g. 1E-7°) as received from the positioning device (5312 * 1E-7°). Thus, computation is simplified.

In addition, the control unit is configured to (advantageously repeatedly for each data packet, see below) determine the compressed position data PD1' by performing a scaling operation, a rounding operation, and a gridding operation on at least a part of the received position data PD1 such as the latitude data and/or the longitude data. While the scaling operation and the rounding operation rescales and rounds the position data PD1, respectively, the gridding operation projects the scaled and rounded data onto a grid such that the compressed position data PD1' retains position only relative to an origin of a respective grid cell. Thus, a bit width S1' of the compressed position data PD1' is smaller than a bit width S1 of the position data PD1. As an example, the compressed position data PD1' has a bit width (size) of 20 bits for latitude and longitude each while the original uncompressed position data PD1 has a bit width (size) of 32 bits for each dimension. Thus, bandwidth usage can be reduced when the compressed position data PD1' is later broadcasted (see below). This enables the broadcasting of more information and/or at a higher update rate.

According to the invention, the control unit is further configured to generate the data packet D1 comprising the compressed position data PD1' and comprising an identifier ID1 of the broadcast device.

Note that further information can optionally be determined by the positioning device and/ or generated by the control unit, e.g. ground speed, air speed, course/track, climb rate, acceleration, turn rate, movement mode, horizontal position accuracy, vertical position accuracy, velocity accuracy, a future flight trajectory, e.g. as computed from the current position P1 and velocity and/ or acceleration and/ or wind vectors, etc. This further information or values indicative thereof can then be added to the data packet D1 in compressed or uncompressed form which improves the calculation of collision probabilities and/or situational awareness.

According to the invention, the broadcast device further comprises a radio transmitter which is configured to receive the generated data packet D1 from the control unit, e.g. via an internal bus such as an I2C or a serial bus. The data packet D1 is indicative of the to-be-broadcasted information pertaining to the first aircraft (at least when the broadcast device is mounted to, affixed at, or situated in or at the aircraft or a pilot onboard the aircraft) and it is wirelessly broadcasted by the radio transmitter, e.g. to ground based receiver stations and/ or to adjacent aircraft. Thus, a receiver of the data packet D1 can reconstruct the position P1 by uncompressing the received compressed position data PD1' and - using these values - e.g. calculate a collision probability and - based thereon - putatively issue a warning to the pilot. This enhances the safety of the aircraft(s) and/or overall situational awareness.

In the case that the position data PD1 comprises altitude data PD1_ALT, the broadcast device is advantageously configured to determine the compressed position data PD1' such that the compressed position data comprises the altitude data PD1_ALT or a value indicative thereof (e.g. with an offset), in particular in an uncompressed form, i.e. not subject to scaling, rounding, and gridding operations.

According to the invention, the broadcast device is configured to, for determining the compressed position data, perform the scaling operation on the latitude data PD1_LAT using a latitude resolution divider D_LAT and perform the gridding operation on the latitude data PD1_LAT using a latitude modulus m_LAT on the outcome of said scaling operation. In addition, the broadcast device is configured to perform the scaling operation on the longitude data PD1_LON using a longitude resolution divider D_LON and perform the gridding operation on the longitude data PD1_LON using a longitude modulus m_LON on the outcome of said scaling operation. Both operations (i.e. compression of the latitude data and compression of the longitude data) are performed at the same time. Thus, even more bandwidth is saved.

It can be imagined that the described gridding operation corresponds to relating the compressed position data PD1' to an origin of a local grid cell around the sender and transmitting only a relative position to the origin of said grid cell. As an illustrative example (disregarding the 1E-7° scaling), the uncompressed position 47.37647448696338 N, 8.559292331307462 E (https://w3w.co/spiele.bemerkte.handlung) could be broadcasted as 37647448696338 N, 559292331307462 E, thus neglecting the integral parts of the coordinates above (47° N/ 8° E) and only broadcasting the fractional part. Such an approach introduces ambiguity, however, because the position could be in the city of Zurich (for the true 47° N/ 8° E), in Altstätten SG (for 47° N/ 9° E), in Schwetzingen near Heidelberg (for 49° N/ 8° E), and so on. However, when a receiver knows that the sender must be located close to the city of Zurich (e.g. because it cannot receive radio signals from Altstätten SG, from Schwetzingen, etc.), this ambiguity can later be resolved. Advantageously, the gridding operation is performed in such a way that the grid size G for the gridding operation is larger than a radio range of the broadcast device, in particular by a factor of 2 or more. Then, during later position reconstruction (i.e. uncompression), e.g. the original latitude data PD1_LAT and/or the original longitude data PD1_LON can be unambiguously reconstructed by using the principle of locality (see below).

In an advantageous embodiment, the broadcast device is configured to determine the latitude modulus m_LAT for the latitude gridding operation using a compressed latitude bit width S1'_LAT of compressed latitude position data PD1'_LAT. In particular, the latitude modulus is $m\_LAT = 2^{S1'\_LAT}$. Alternatively or in addition, the longitude modulus m_LON for the longitude gridding operation is determined using a compressed longitude bit width S1'_LON of compressed longitude position data PD1'_LON. In particular the longitude modulus is $m\_LON = 2^{S1'\_LON}$. Thus, computation is simplified.

According to the invention, the broadcast device is configured to, for determining the compressed position data PD1', compress the latitude data PD1_LAT to obtain the compressed latitude data PD1'_LAT according to

$$PD1'\_LAT = \frac{\left(PD1\_LAT + \frac{D\_LAT}{2}\right)}{D\_LAT} \bmod m\_LAT$$

Here, D_LAT is the latitude resolution divider, m_LAT is the latitude modulus, mod is the modulo operator, advantageously in its mathematical definition, and the divisions are advantageously integer divisions truncated to the next lower integer (floored division). This removes the need for a case discrimination for negative values of PD1_LAT indicative of latitudes on the southern hemisphere.

The same applies for the longitude compression, i.e. the longitude data PD1_LON is compressed to obtain the compressed longitude data PD1 ' _LON, wherein

$$PD1'\_LON = \frac{\left(PD1\_LON + \frac{D\_LON}{2}\right)}{D\_LON} \bmod m\_LON$$

Again, D_LON is the longitude resolution divider, m_LON is the longitude modulus, mod is the modulo operator, advantageously in its mathematical definition, and the divisions are advantageously integer divisions truncated to the next lower integer (floored division).

The addition of D_LAT/2, D _LON/2 is used to round the original uncompressed latitude/longitude data (rounding operation) prior to applying the division and the modulo operation. Thus, it is ensured that a proper mapping results between uncompressed and compressed position data.

In another advantageous embodiment, the broadcast device is configured to, for determining the compressed position data PD1', determine the latitude resolution divider D_LAT using a minimum required grid size G_min for the gridding operation and using the compressed latitude bit width S1'_LAT of the compressed latitude data PD1'_LAT. In particular,

$$D\_LAT = \mathrm{ceil}\left(\frac{G\_min}{m\_LAT\,res\_raw}\right)$$

where G_min is the minimum required grid size for the gridding operation, $m\_LAT=2^{S1'\_LAT}$ is the latitude modulus, res_raw is a resolution of the latitude data PD1_LAT as, e.g. defined by the positioning device, and ceil() is the ceiling function which returns the smallest possible integer value which is greater than or equal to the given argument. Thus, a proper scaling results for the latitude data.

Then, advantageously, the broadcast device is configured to, for determining the compressed position data PD1', determine the longitude resolution divider D_LON as a function of the latitude data PD1_LAT. In particular

$$D\_LON = \mathrm{ceil}\left(\frac{G/\cos(PD1\_LAT)}{m\_LAT\,res\_raw}\right)$$

where PD1_LAT is the latitude data and cos() is the cosine function with appropriate scaling depending on the resolution of PD1_LAT. This is to account for a proper scaling to, e.g., radians or degrees. By means of this approach, the longitude scaling can be properly adapted to higher/ lower latitudes.

Then, advantageously, the broadcast device is configured to, for determining the compressed position data PD1', approximate the longitude resolution divider D_LON as

$$D\_LON = a\_0 + \sum_{n=1}^{N} a\_n\,\mathrm{thr}(|PD1\_LAT| - LAT\_n)$$

where a_0 is an integer constant, a_1 ... a_N are integer approximation coefficients, LAT_1 ... LAT_N are integer latitude thresholds, |...| returns the absolute value of its argument, and thr() is the threshold function defined as

$$\mathrm{thr}(x) = \begin{cases} x & \text{if } x > 0 \\ 0 & \text{else} \end{cases}$$

Thus, computation is simplified, especially on lower end hardware.

In particular, the approximation can be carried out with N=7 with $a\_0=52$, $a\_1=2^{-1}$, $a\_2=2^0$, $a\_3=2^1$, $a\_4=2^2$, $a\_5=2^3$, $a\_6=2^4$, $a\_7=2^5$, LAT_1=12, LAT_2=39, LAT_3=56, LAT_4=57, LAT_5=73, LAT_6=79, and LAT_7=82. This yields an approximation that is very accurate for latitudes up to about 85°.

In an advantageous embodiment, the broadcast device is configured to perform the gridding operation in such a way that the grid size G of the gridding operation is larger than a radio range of the broadcast device, in particular by a factor of 2 or more. Thus, reconstruction of the uncompressed position data is facilitated.

Preferably, the broadcast device is configured to generate the data packet D1 in such a way that it comprises a header section and a payload section. In particular the header section is non-encrypted and/or the payload section is encrypted, e.g. by means of a symmetric or an asymmetric (e.g. public/private key) cryptographic algorithm. Thus, parts of the data packet D1 can be received and read by anyone while other parts of the packet can only be read by authorized receivers. This enhances security.

Then, advantageously, the payload section of the data packet D1 is encrypted by means of a symmetric cryptographic algorithm (e.g. AES with a key size of, e.g. 128 bits) and, in particular, the broadcast device is configured to use a cryptographic nonce based on the header section of the data packet D1, based on a time stamp, and based on a secret constant for encrypting the payload section of the data packet D1. Here, the term based on means that the cryptographic nonce is determined using the header section, the time stamp, and the secret constant. Thus, security is further enhanced, because, e.g. the cryptographic nonce contains the changing time stamp and the variable data packet header which renders replay attacks not feasible.

In yet another preferred embodiment, the broadcast device is configured to generate the data packet D1 in such a way that it comprises at least one of

- a timestamp, in particular in the (e.g. encrypted) payload section of the data packet,
- a packet protocol version, in particular in the (e.g. non-encrypted) header section of the data packet, and
- a maximum supported packet protocol version, in particular in the (e.g. non-encrypted) header section of the data packet.

This makes it possible to implement additional features, e.g. for enhancing protocol compatibility between different devices with putatively varying computational resources.

In an advantageous embodiment of the invention, the broadcast device is configured to,

- repeatedly determine updated position data PD1 indicative of an updated position P1 of the broadcast device by means of the positioning device, in particular comprising updated longitude data PD1_LON and/or updated latitude data PD1_LAT,
- repeatedly determine updated compressed position data PD1' using at least a part of the updated position data PD1, and
- repeatedly generate and broadcast an updated data packet D1 comprising the updated compressed position data PD1' and comprising the identifier ID1 of the broadcast device.

In particular, any time interval between two of such consecutive updates (i.e. determining the updated position data PD1 and compressing it to determine the updated compressed position data PD1' and generating and broadcasting the updated data packet D1) is between 0.1 s and 5 s, in particular is between 0.5 s and 1 s, and in particular is 1 s.

Advantageously, the broadcast device is configured to, at a predefined interval of, e.g. 30 s,

- repeatedly determine updated position data PD1 indicative of an updated position P1 of the broadcast device by means of the positioning device,
- repeatedly generate and broadcast an updated data packet D1 comprising the (uncompressed) updated position data PD1 and comprising the identifier ID1 of the broadcast device.

This way, intermingled in the compressed position data packets as described above, uncompressed position data can be broadcasted with a rather slow update rate, which helps, e.g. stationary receiving broadcast devices with putatively larger radio ranges to initialize a tracking mechanism which helps to uncompress/ disambiguate signals that are received from a distance exceeding the grid size.

Advantageously, the broadcast device is further configured to generate the data packet D1 in such a way that it comprises a pair $c_1 = (e_1, m_1)$ with an exponent $e_1$ being a natural number and with a mantissa $m_1$ being a natural number.

This pair or code point c1 is indicative of a value v1 (e.g. including a rounding of the value v1), which can be a floating point or a natural number. The mantissa m1 has a bit width of $N_{m1}$ (e.g. 7) and the exponent e1 has a bit width of $N_{e1}$ (e.g. 2). Then, $v1 = 2^{e1} * (2^{Nm1} + m1) - 2^{Nm1}$. According to the invention, the bit widths $N_{m1}$ and $N_{e1}$ are selected such that a total bit width $N1 = N_{e1} + N_{m1}$ of the pair c1 is smaller than a total bit width of the value v1. A linear scaling factor A1 representing the physical unit/ resolution for the encoded numerical value v1 can also be used, see chapter 2.1 for the AMP protocol description below for details. Thus, bandwidth is saved while a wide range of values v1 can be encoded.

Advantageously, the broadcast device is configured to generate the data packet D1 in such a way that the pair c1 is indicative of velocity data VD1 of the first aircraft. In particular the value v1 is indicative of a velocity vector magnitude of the first aircraft (i.e. an absolute value of the aircraft's velocity). Thus, bandwidth is saved while a wide range of velocity vector magnitudes (e.g., ranging from a hobbyist UAV to a military jetplane) can be encoded.

In another preferred embodiment of the invention, the broadcast device further comprises a radio receiver (or a combined radio transceiver for broadcasting and receiving data packets) which is configured to receive a foreign data packet D2 as broadcasted from a foreign broadcast device. The foreign data packet D2 is, similarly to the first data packet D1 as discussed above, indicative of information pertaining to a second aircraft, at least when mounted to, affixed at, or situated in or at the second aircraft or a pilot onboard the second aircraft.

The foreign (or external, during intended operation arranged at a distance) broadcast device has the same features as the broadcast device described herein (with or without radio receiver). The foreign broadcast device creates the foreign data packet in the same way, i.e. the foreign data packet comprises the same information and has the same structure as the data packet broadcasted by the broadcast device as described herein. In particular, the same compression algorithm is used by the foreign broadcast device.

Specifically, the foreign data packet D2 comprises foreign compressed position data PD2'. A bit width S2' of the foreign compressed position data PD2' is smaller than a bit width S2 of uncompressed foreign position data PD2 indicative of a position P2 of the foreign broadcast device. The receiving broadcast device is then configured to uncompress the received foreign compressed position data PD2' using its own position data PD1 and therefore reconstruct the foreign position data PD2. Thus, ambiguities in the foreign compressed position data PD2' resulting from the gridding operation of the foreign position data PD2 are resolved (disambiguation). In the illustrative example above, the broadcast device would know that it can only receive data packets from the region around the city of Zurich and reconstruct the 47° N/ 8° E of the received foreign compressed position data PD2' taking into account the fact that both broadcast devices must be located in or near the city of Zurich due to radio range considerations. The foreign position candidate that results in the lowest distance between the sending and the receiving broadcast devices is considered to be correct. In addition, the signal strength (e.g. RSSI) and/or directional characteristics (e.g. from a receiver antenna array) of the received foreign data packet D2 can be taken into account for disambiguation.

Then, advantageously, the broadcast device is configured to, for uncompressing the foreign compressed position data PD2' using the own position data PD1 to reconstruct the foreign position data PD2 (i.e. the uncompressed position of the transmitting foreign broadcast device):

- uncompress foreign latitude data PD2_LAT from the received compressed foreign latitude data PD2' _LAT using the own latitude data PD1_LAT,
- determine the longitude resolution divider D_LON using the foreign latitude data PD2_LAT as discussed above, advantageously using the approximation as discussed above, and
- uncompress foreign longitude data PD2_LON from the received compressed foreign longitude data PD2' _LON using the determined longitude resolution divider D_LON and the own longitude data PD1_ LON.

Therefore, the uncompressed foreign position data PD2 of the transmitting broadcast device can be reconstructed by the receiving broadcast device while bandwidth in the transmission is saved.

Then, in a preferred embodiment, the broadcast device is configured to, for determining the longitude resolution divider (D_LON) using the foreign latitude data (PD2_LAT), approximate the longitude resolution divider D_LON as

$$D\_LON = a\_0 + \sum_{n=1}^{N} a\_n \, thr(|PD2\_LAT| - LAT\_n)$$

Herein, a_0 is a constant, a_1 ... a_N are approximation coefficients, LAT_1 ... LAT_N are latitude thresholds, |...| returns the absolute value of its argument, and thr() is the threshold function defined as

$$thr(x) = \begin{cases} x & \text{if } x > 0 \\ 0 & \text{else} \end{cases}$$

Thus, computation is simplified, especially on lower end hardware.

In particular, N=7 with a_0=52, a_1=$2^{-1}$, a _2=$2^0$, a _3=$2^1$, a_4=$2^2$, a_5=$2^3$, a _6=$2^4$, a_7=$2^5$, LAT_1=12, LAT_2=39, LAT_3=56, LAT_4=57, LAT_5=73, LAT_6=79, and LAT_7=82. This yields an approximation that is very accurate for latitudes up to about 85°.

Furthermore, advantageously, the broadcast device is configured to calculate a collision probability between the first aircraft and the second aircraft and/or provide information improving situational awareness, e.g. by taking the aircraft positions as comprised in the first and second data packets into account. In general, the situation is assessed based on the information pertaining to the first aircraft which is available to the broadcast device (own information) and based on the received information pertaining to the second aircraft (foreign information). Preferably, a collision warning is then issued to the pilot when the collision probability exceeds a certain threshold which helps to decreases the risk of a mid-air collision.

As another aspect of the invention, a receiver device comprises:

- a radio receiver configured to receive a foreign data packet D2 as broadcasted from a foreign broadcast device. The foreign data packet D2 is, similarly to the first data packet D1 as discussed above, indicative of information pertaining to a second aircraft, at least when mounted to, affixed at, or situated in or at the second aircraft or a pilot onboard the second aircraft.

The foreign (or external, during intended operation arranged at a distance) broadcast device has the same features as the broadcast device described herein (with or without radio receiver) with regard to the first aspect of the invention. The foreign broadcast device creates the foreign data packet in the same way, i.e. the foreign data packet comprises the same information and has the same structure as the data packet broadcasted by the broadcast device as described herein. In particular, the same compression algorithm is used by the foreign broadcast device.

Specifically, the foreign data packet D2 comprises foreign compressed position data PD2'. A bit width S2' of the foreign compressed position data PD2' is smaller than a bit width S2 of uncompressed foreign position data PD2 being indicative of an unambiguous position P2 of the foreign broadcast device.

The receiver device further comprises

- a control unit which is configured to:

    * receive position data PD1 indicative of a position P1 of the receiver device. This position P1 can be fixed, e.g. for a stationary receiver station on the ground or it can be variable, e.g. for a receiving only device mounted in a car or a "receiving only" aircraft. In the first case, the position P1 can e.g. be hardcoded in firmware and read out/received by the control unit, in the second case, the position P1 can be determined by a positioning device such as a GNSS receiver of the receiver device and received by the control unit, similarly to the case discussed above with regard to the combined transmitting and receiving broadcast device.

Further, the control unit is configured to:

    * receive the foreign data packet D2 as received by the radio receiver, and
    * uncompress the foreign compressed position data PD2' using its own position data PD1 to reconstruct the foreign position data PD2.

Thus, ambiguities can be resolved as discussed above.

Please note in this regard that all the technical effects and advantages as described above with the regard to the transmitting broadcast device similarly apply here for the receiving only device and are not repeated for reasons of clarity, as the devices complement each other and rely on the same inventive concept.

Then, the receiver device is configured to, for uncompressing the foreign compressed position data PD2' using the own position data PD1 to reconstruct the foreign position data PD2 (i.e. the uncompressed position of the transmitting foreign broadcast device):

- uncompress foreign latitude data PD2_LAT from the received compressed foreign latitude data PD2'_LAT using the own latitude data PD1_LAT,
- determine the longitude resolution divider D_LON using the foreign latitude data PD2_LAT as discussed above, advantageously using the approximation as discussed above, and
- uncompress foreign longitude data PD2_LON from the received compressed foreign longitude data PD2'_LON using the determined longitude resolution divider D_LON and the own longitude data PD1_ LON.

Therefore, the uncompressed foreign position data PD2 of the transmitting broadcast device can be reconstructed by the receiver device while bandwidth in the transmission is saved.

Then, in a preferred embodiment, the receiver device is configured to, for determining the longitude resolution divider (D_LON) using the foreign latitude data (PD2_LAT), approximate the longitude resolution divider D_LON as

$$D\_LON = a\_0 + \sum_{n=1}^{N} a\_n \, thr(|PD2\_LAT| - LAT\_n)$$

Herein, a_0 is a constant, a_1 ... a_N are approximation coefficients, LAT_1 ... LAT_N are latitude thresholds, |...| returns the absolute value of its argument, and thr() is the threshold function defined as

$$thr(x) = \begin{cases} x & if \, x > 0 \\ 0 & else \end{cases}$$

Thus, computation is simplified, especially on lower end hardware.

In particular, N=7 with a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, and LAT_7=82. This yields an approximation that is very accurate for latitudes up to about 85°.

As yet another aspect of the invention, a method for, by means of a broadcast device, in particular as discussed above with regard to the first aspect of the invention, wirelessly broadcasting information pertaining to a first aircraft comprises steps of:

- providing the broadcast device comprising a positioning device, a control unit, and a radio transmitter, advantageously mounted or mountable to, affixed or affixable at, or situated or situatable in or at the first aircraft or a pilot onboard the first aircraft, and
- by means of the positioning device (e.g. a GNSS receiver such as a GPS receiver, a GLONASS receiver, a Galileo receiver and/or a combined positioning device taking into account information from onboard navigational systems, see above) determining position data PD1 indicative of a position P1 of the broadcast device. The position data PD1 comprises latitude data PD1_LAT indicative of a latitude of the broadcast device and longitude data PD1_LON indicative of a longitude of the positioning device. Altitude data PD1_ALT is advantageously also comprised. The position data PD1 can optionally at least in part be determined and/or enhanced from on-board navigational systems of the aircraft such as a barometric pressure sensor, a magnetic sensor, an acceleration sensor, an inertial navigation system, etc., e.g. to increase the altitude precision which can be rather poor for typical GNSS devices without correction. In such a case, the combined GNSS receiver together with the additional sensor/system as well as any data fusion logics involved qualifies as "positioning device" according to the invention.

The method comprises a further step of, by means of the control unit, receiving the position data PD1 as determined by the positioning device, preferably via an internal bus such as a serial or an I2C bus. Then, the position data is advantageously stored in the memory (typically as short-term storage in a volatile memory such as RAM). Subsequently, the control unit determines compressed position data PD1' by performing a scaling operation, a rounding operation, and a gridding operation on at least a part of the received position data PD1 such as the latitude data and/or the longitude data. While the scaling operation and the rounding operation rescales and rounds the position data PD1, respectively, the gridding operation projects the scaled and rounded data onto a grid such that the compressed position data PD1' retains position only relative to an origin of a respective grid cell. Thus, a bit width S1' of the compressed position data PD1' is smaller than a bit width S1 of the position data PD1. As an example, the compressed position data PD1' has a bit width (size) of 20 bits for latitude and longitude each while the original uncompressed position data PD1 has a bit width (size) of 32 bits each. Thus, bandwidth usage can be reduced when the compressed position data PD1' is later broadcasted (see below). This enables the broadcasting of more information and/or at a higher update rate.

According to the invention, the method comprises a further step of generating a data packet D1 by means of the control unit comprising the compressed position data PD1 and comprising an identifier ID1 of the broadcast device.

Please note that further information can optionally be determined by the positioning device and/ or generated by the control unit, e.g. ground speed, air speed, course/track, climb rate, acceleration, turn rate, movement mode, horizontal position accuracy, vertical position accuracy, velocity accuracy, a future flight trajectory as computed from the current position P1 and velocity and/or acceleration and/ or wind vectors, etc. These further information or values indicative thereof can then be added to the data packet D1 in compressed or uncompressed form which improves the calculation of collision probabilities and/or situational awareness.

According to the invention, the method comprises a further step of, by means of the radio transmitter, receiving the generated data packet D1 (e.g. via an internal bus) and wirelessly broadcasting the received data packet D1, e.g. to ground based receiver stations and/or to adjacent aircraft. The broadcasted data packet D1 is indicative of the to-be-broadcasted information pertaining to the first aircraft. Thus, a receiver of the data packet D1 can reconstruct the position P1 by uncompressing the received compressed position data PD1' and - using these values - e.g. calculate a collision probability and - based thereon - putatively issue a warning to the pilot. This enhances the safety of the aircraft(s) and/or overall situational awareness.

According to the invention, the method comprises further steps of performing the scaling operation on the latitude data PD1_LAT using a latitude resolution divider D_LAT and performing the gridding operation on the latitude data PD1_LAT using a latitude modulus m_LAT on the outcome of said scaling operation, and performing the scaling operation on the longitude data PD1_LON using a longitude resolution divider D_LON and performing the gridding operation on the longitude data PD1_LON using a longitude modulus m_LON on the outcome of said scaling operation.

The latitude data (PD1_LAT) is compressed to obtain the compressed latitude data (PD1'_LAT), wherein

$$PD1'\_LAT = \frac{\left(PD1\_LAT + \frac{D\_LAT}{2}\right)}{D\_LAT} \bmod m\_LAT$$

where D_LAT is the latitude resolution divider, m_LAT is the latitude modulus, and mod is the modulo operator, advantageously in its mathematical definition, and the divisions are advantageously integer divisions truncated to the next lower integer (floored division). This removes the need for a case discrimination for negative values of PD1_LAT indicative of latitudes on the southern hemisphere.

The longitude data (PD1_LON) is compressed to obtain the compressed longitude data (PD1'_LON), wherein

$$PD1'\_LON = \frac{\left(PD1\_LON + \frac{D\_LON}{2}\right)}{D\_LON} \bmod m\_LON$$

where D_LON is the longitude resolution divider, m_LON is the longitude modulus, and mod is the modulo operator, advantageously in its mathematical definition, and the divisions are advantageously integer divisions truncated to the next lower integer (floored division).

The addition of D_LAT/2, D_LON/2 is used to round the original uncompressed latitude/longitude data (rounding operation) prior to applying the division and the modulo operation. Thus, it is ensured that a proper mapping results between uncompressed and compressed position data.

Both operations (i.e. compression of the latitude data and compression of the longitude data) are performed at the same time. Thus, even more bandwidth is saved.

In another preferred embodiment of the invention, the broadcast device further comprises a radio receiver (or a combined radio transceiver for broadcasting and receiving data packets).

The method comprises a step of receiving, by means of the radio receiver, a foreign data packet D2 as broadcasted from a foreign broadcast device. The foreign data packet D2 is indicative of information pertaining to a second aircraft, at least when mounted to, affixed at, or situated in or at the second aircraft or a pilot onboard the second aircraft.

The foreign (or external, during intended operation arranged at a distance) broadcast device has the same features as the broadcast device described herein (with or without radio receiver) with regard to the first aspect of the invention. The foreign broadcast device creates the foreign data packet in the same way, i.e. the foreign data packet comprises the same information and has the same structure as the data packet broadcasted by the broadcast device as described herein. In particular, the same compression algorithm is used by the foreign broadcast device.

Specifically, the foreign data packet D2 comprises foreign compressed position data PD2'. A bit width S2' of the foreign compressed position data PD2' is smaller than a bit width S2 of uncompressed foreign position data PD2 indicative of a position P2 of the foreign broadcast device.

The method comprises a further step of uncompressing the foreign compressed position data PD2' using its own position data PD1 as described above. Thus, the foreign position data PD2 is reconstructed and ambiguities in the foreign compressed position data PD2' resulting from the gridding operation of the foreign position data PD2 are resolved.

Then, advantageously, the step of uncompressing the foreign compressed position data PD2' using the position data PD1 to reconstruct the foreign position data (PD2) comprises

- uncompressing foreign latitude data PD2_LAT from the received compressed foreign latitude data PD2'_LAT using the own latitude data PD1_LAT,
- determining the longitude resolution divider D_LON using the foreign latitude data PD2_LAT as discussed above, advantageously using the approximation as discussed above, and

- uncompressing foreign longitude data PD2 _LON from the received compressed foreign longitude data PD2' _LON using the determined longitude resolution divider D_LON and the own longitude data PD1_LON.

Therefore, the uncompressed foreign position data PD2 of the transmitting broadcast device can be reconstructed by the receiving broadcast device while bandwidth in the transmission is saved.

As yet another aspect of the invention, a method for, by means of a receiver device, in particular as discussed above with regard to the second aspect of the invention, wirelessly receiving information pertaining to a second aircraft comprises steps of:

- providing the receiver device comprising a control unit and a radio receiver,
- by means of the radio receiver receiving a foreign data packet D2 as broadcasted from a foreign broadcast device. The foreign data packet D2 is indicative of information pertaining to a second aircraft, at least when mounted to, affixed at, or situated in or at the second aircraft or a pilot onboard the second aircraft.

The foreign (or external, during intended operation arranged at a distance) broadcast device has the same features as the broadcast device described herein (with or without radio receiver) with regard to the first aspect of the invention. The foreign broadcast device creates the foreign data packet in the same way, i.e. the foreign data packet comprises the same information and has the same structure as the data packet broadcasted by the broadcast device as described herein. In particular, the same compression algorithm is used by the foreign broadcast device.

Specifically, the foreign data packet D2 comprises foreign compressed position data PD2', wherein a bit width S2' of the foreign compressed position data PD2' is smaller than a bit width S2 of foreign position data PD2 being indicative of an uncompressed position P2 of the foreign broadcast device.

The method comprises a further step of, by means of the control unit:

* receiving position data PD1 indicative of a position P1 of the receiver device. This position P1 can be fixed, e.g. for a stationary receiver station on the ground or it can be variable, e.g. for a receiving only device mounted in a car or a "receiving only" aircraft. In the first case, the position P1 can e.g. be hardcoded in firmware and read out/received by the control unit, in the second case, the position P1 can be determined by a positioning device such as a GNSS receiver of the receiver device and received by the control unit, similarly to the case discussed above with regard to the combined transmitting and receiving broadcast device.
* receiving the foreign data packet D2 as received by the radio receiver,
* uncompressing the foreign compressed position data PD2' using its own position data PD1 to reconstruct the foreign position data (PD2).

Thus, ambiguities can be resolved as discussed above.

Then, the step of uncompressing the foreign compressed position data PD2' using the position data PD1 to reconstruct the foreign position data (PD2) comprises

- uncompressing foreign latitude data PD2_LAT from the received compressed foreign latitude data PD2' _LAT using the own latitude data PD1_LAT,
- determining the longitude resolution divider D_LON using the foreign latitude data PD2_LAT as discussed above, advantageously using the approximation as discussed above, and
- uncompressing foreign longitude data PD2 _LON from the received compressed foreign longitude data PD2' _LON using the determined longitude resolution divider D_LON and the own longitude data PD 1 LON.

Therefore, the uncompressed foreign position data PD2 of the transmitting broadcast device can be reconstructed by the receiver device while bandwidth in the transmission is saved.

As yet another aspect of the invention, a computer program product comprises instructions to cause a broadcast device as described above with regard to the first aspect of the invention to execute the steps of a method as described above with regard to the third aspect of the invention.

Alternatively, the computer program product comprises instructions to cause a receiver device as described above with regard to the second aspect of the invention to execute the steps of a method as described above with regard to the fourth aspect of the invention

This computer-program product is - according to another aspect of the invention - stored on a computer-readable medium. It can then be read by a device as discussed above with regard to the first or second aspect of the invention and then causes the device to execute the steps of a method as described above with regard to the third or fourth aspect of the invention, respectively.

As another aspect of the invention, a use of a broadcast device as discussed above with regard to the first aspect of the invention at a first aircraft (or a pilot onboard the first aircraft such as a paraglider pilot wearing a variometer/RCDI device implementing the functionality as discussed above with regard to the first and second aspects of the invention) for wirelessly broadcasting information pertaining to the first aircraft is disclosed, in particular for collision avoidance and/or improved situational awareness. This improves compatibility thus enabling efficient collision avoidance and/or situational awareness functionality.

As yet another aspect of the invention, a system for aircraft collision avoidance comprises

- a first broadcast device as discussed above with regard to the first aspect of the invention at a first aircraft (or pilot) for wirelessly broadcasting information pertaining to the first aircraft, and at least one of
- a second broadcast device as discussed above with regard to the first aspect of the invention at a second aircraft (or pilot) for wirelessly broadcasting information pertaining to the second aircraft, and
- a receiver device for receiving the information pertaining to the first aircraft as broadcasted by the first broadcast device.

Thus a collision probability between the first aircraft and the second aircraft is easier to derive, e.g. by taking the information pertaining to the first and second aircraft into account. Preferably, a collision warning is then issued to the pilot when the collision probability exceeds a certain threshold which helps to decreases the risk of a mid-air collision. With the receiver device, the information pertaining to the first aircraft as broadcasted by the first broadcast device can be received and the position of the first aircraft can be tracked.

This improves overall safety and/or situational awareness.

Brief Description of the Drawings

The invention will be better understood and objects other than those set forth above will become apparent when consideration is given to the following detailed description thereof. Such description makes reference to the annexed drawings, wherein:

Figs. 1a-1c show the principle of Extended Range Encoding (ERC),
Figs. 2 - 4 show the principle of Adaptive Coordinate Compression (ACC),
Fig. 5 shows a broadcast device 10 according to an embodiment of the invention and a display unit 18, the broadcast device 10 comprising a positioning device 11, a control unit 12, and a radio transceiver 13, 14,
Fig. 6 shows a system for aircraft collision avoidance comprising a first broadcast device 10 at a first aircraft 1, a second broadcast device 20 at a second aircraft 2, a third broadcast device 30 at a paraglider pilot, and a ground based receiver station 40,
Fig. 7 shows a broadcast device 10 according to an embodiment the invention and a display unit 18, the broadcast device 10 comprising a positioning device 11, a control unit 12, and a radio transceiver 13, 14, and
Fig. 8 shows a receiver device 100 according to an embodiment of the invention and a display unit 18, the receiver device 100 comprising a positioning device 11, a control unit 12, and a radio receiver 14.

Modes for Carrying Out the Invention

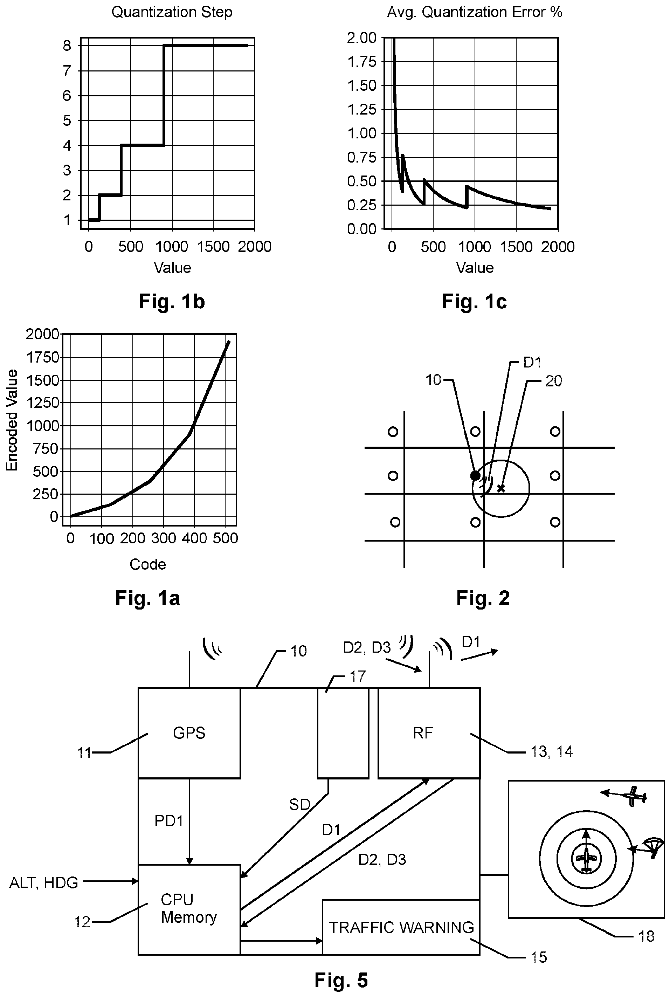

Figs. 1a-1c show the principle of Extended Range Encoding (ERC) as used in an embodiment of the invention. Specifically, in Fig. 1a, it is shown that the encodable value range increases from 0...511 for a 9 bit integer and for a linear mapping with $2^9-1$ (x-axis) to 0... 1912 for a 9 bit ERC pair with $N_e = 2$, $N_m = 7$ (y-axis, $v_{max}=2^3(2^7 + 127) - 2^7 = 1912$ with $e = 2^2-1$ and $m = 2^7-1$). In Fig. 1b, it is shown that the absolute resolution decreases (i.e. the quantization step increases) at the values $v = 128$, $v =128+256 = 384$, and $v = 128+256+512 = 896$ (x-axis), respectively. However, as it is shown in Fig. 1c, the relative quantization error (y-axis, the quantization step as shown in Fig. 1b at a given value divided by the value itself) decreases with higher ERC encoded values v (x-axis). See the chapter "AMP Protocol Description", section 2.1 for details.

Figs. 2 - 4 show the principle of Adaptive Coordinate Compression (ACC) as used in the invention, in which a broadcast device 10 transmits its compressed position PD1' in a data packet D1 relative to a local grid cell (rectangles) origin.

In Fig. 2, a receiver ("x") (e.g. a second broadcast device 20) of a data packet D1 determines the correct position P1 (black solid dot) of the broadcast device 10 by taking proximity considerations due to limited radio range into account. Due to properties of the grid, any of the open dot positions are also mathematically correct and can only be discarded due to the inherent physical proximity of the sender and the receiver.

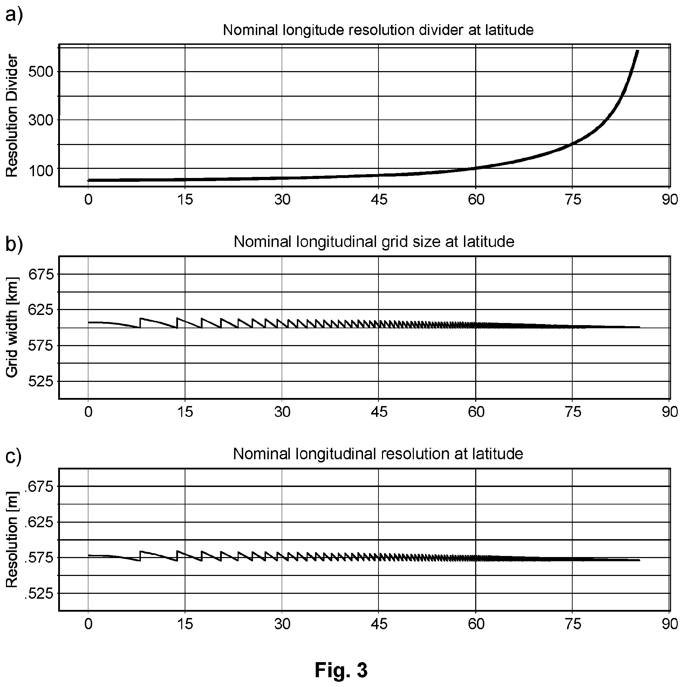

In Fig. 3a, the nominal longtitude resolution divider D_LON(LAT) is shown as a function of the latitude LAT (i.e. the latitude data PD1_LAT). Since the meridians converge with 1/cos(LAT) towards the poles, the optimal adaptation is straightforwardly achieved by simply scaling D_LON with the latitude LAT as described in the AMP protocol description in section 2.2 below. Such a scaling achieves an (almost) uniform resolution and grid size throughout all latitudes as shown in Figs. 3a and 3b, respectively. Small deviations are due to the conversion to integer. This approach prevents that the longitudinal grid size would drop below the radio range at some latitude; a receiver could then no longer unambiguously determine/ uncompress the sender's position. Conversely, to maintain a sufficient grid size, longitude would require more bits in the transmission. ACC addresses this by dynamically adapting the longitude grid size with higher/ lower latitudes as shown.

The described Fig. 3-approach for longitude encoding is impractical on low-end embedded systems since both the floating-point division as well as the evaluation of the cosine function are computationally expensive, see AMP protocol description, section 2.2 for details. This is also true for the uncompression on the receiver side, as it needs to be calculated for every received data packet D2.

Therefore, a piecewise-linear approximation of D_LON is used in the form

$$D\_LON = a\_0 + \sum_{n=1}^{N} a\_n \, \mathrm{thr}(|PD1\_LAT| - LAT\_n)$$

where a_0 is a constant, a_1 ... a_N are approximation coefficients, LAT_1 ... LAT_N are latitude thresholds, |x| is the absolute value of x, and thr() is the threshold function defined as

$$\mathrm{thr}(x) = \begin{cases} x & \text{if } x > 0 \\ 0 & \text{else} \end{cases}.$$

The coefficients a_1 ... a_N and thresholds LAT_1 ... LAT_N are as follows:

| n | latitude threshold LAT_n | approximation coefficient a_n |
|---|---|---|
| 0 |  | 52 |
| 1 | 12 | $2^{-1}$ |
| 2 | 39 | $2^0$ |
| 3 | 56 | $2^1$ |
| 4 | 57 | $2^2$ |
| 5 | 73 | $2^3$ |
| 6 | 79 | $2^4$ |
| 7 | 82 | $2^5$ |

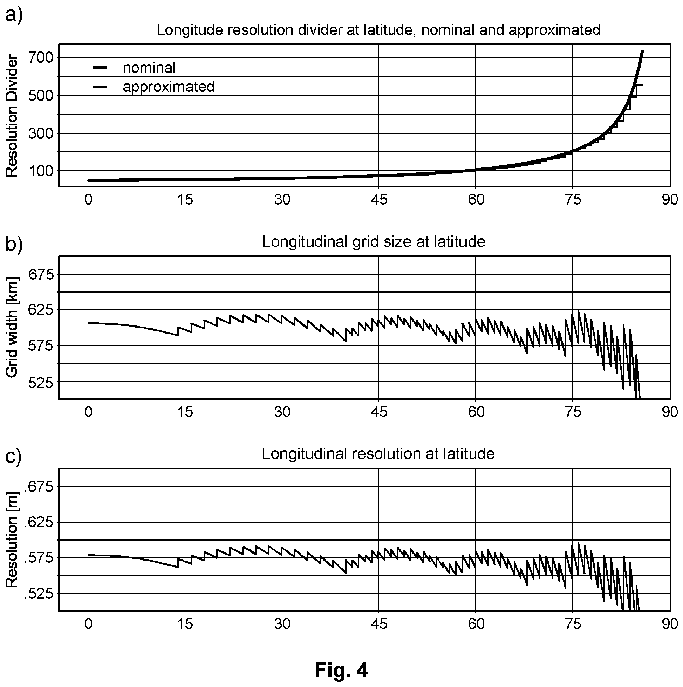

This yields an approximation that is very accurate for latitudes up to about 85° as shown for the longitude resolution divider in Fig. 4a, for the longitudinal grid size in Fig. 4b, and for the longitudinal resolution in Fig. 4c. The same approximation is used for uncompression on the receiver side.

Fig. 5 shows a schematic view of a broadcast device 10 according to an embodiment of the invention as well as a display unit 18. The broadcast device 10 comprises a positioning device 11, a control unit 12 with memory, and a radio transceiver 13, 14. The broadcast device 10 is mounted at a first aircraft 1 (not shown) and receives pressure altitude (ALT) and heading (HDG) data from onboard navigation systems. The positioning device 11 (GPS) is configured to determine three dimensional position data PD1 indicative of a three-dimensional position P1 of the broadcast device/ of the aircraft 1. The control unit 12 (CPU) is configured to receive (via an internal serial bus) the position data PD1 as determined by the positioning device 11, store it in its memory and fuse the received GPS altitude data with the received pressure-based altitude data to improve altitude precision. Specifically, latitude data PD1_LAT and longitude data PD1_LON are stored as signed 32-bit integers indicative of multiples of $10^{-7}$°.

Further, the control unit 12 determines compressed position data PD1' comprising compressed latitude data PD1'_LAT and compressed longitude data PD1'_LON, each having a bit width of 20 bits. The original altitude data P1_ALT is also comprised in the compressed position data PD1' with an offset of -1000 m above the geoid. To generate the compressed latitude/longitude data from the original uncompressed latitude/longitude data, a rounding operation, a scaling operation using a latitude/longitude resolution divider D_LAT/D_LON, and a gridding operation using a latitude/ longitude modulus m_LAT /m_LON on the outcome of said scaling/rounding operation is performed.

As a next step, the to-be-broadcasted data packet D1 is generated such that it comprises the compressed position data PD1', heading HDG, and an identifier ID1 of the broadcast device stored in non-volatile memory.

In the described embodiment, this is all done in software (i.e. as a computer program product stored in a flash memory of the control unit) running on the control unit 12, although outsourcing certain operations to dedicated hardware units (e.g. for encryption/decryption) is possible as well. Acceleration data SD originating from an accelerometer 17 of the broadcast device 10 serves to augment the position data PD1. The data packet D1 is then sent via another internal serial bus to the radio transceiver 13 (RF) which wirelessly broadcasts the received data packet D1 (undirected transmission, non-connection based). The data packet D1 is indicative of the to-be-broadcasted information (ID1, compressed latitude, compressed longitude, altitude, aircraft type, ground track/ heading, ground speed as calculated from position updates, climb rate as calculated from altitude updates, turn rate as calculated from heading updates, movement mode, time and other, see sections 3.1.1 and 3.1.2 of the "AMP Protocol Description" for a list).

Updated position data PD1 (plus heading, speed, etc.) is determined at an update frequency of 1 Hz, i.e. a time frame duration is 1 s. In each of these time frames, two data packets D1 are broadcasted with the same information, one in each transmit-window. The nominal transmit/update rate is thus 2 data packets per second.

The data packet D1 comprises a header section and a payload section, wherein the header section is non-encrypted and wherein the payload section is encrypted by the AES algorithm with a key size of 128 bits (see the chapter "AMP Protocol Description" for details).

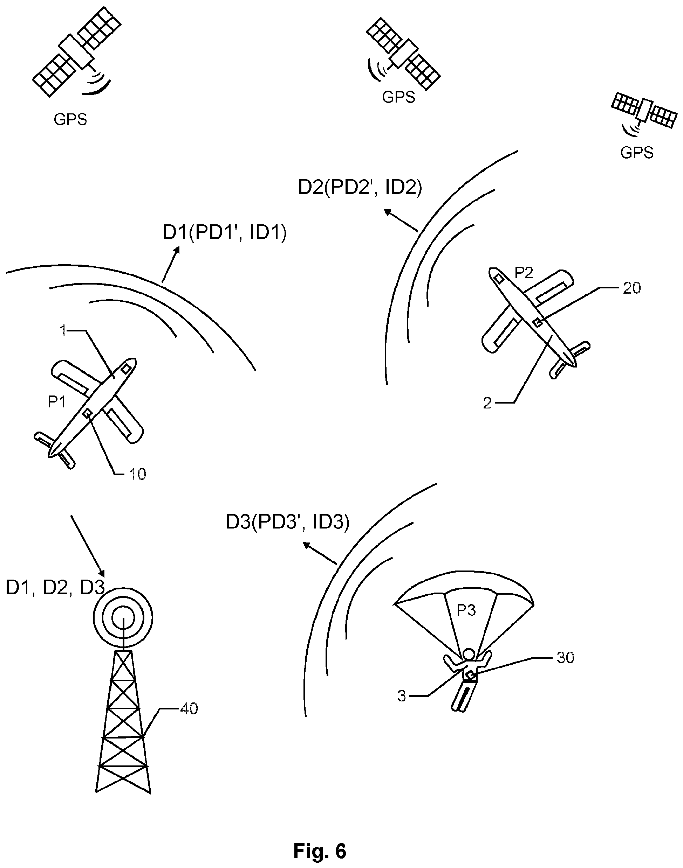

In addition to broadcasting the data packets D1, the radio transceiver 13, 14 (RF) also acts as a radio receiver 14 for receiving foreign data packets D2, D3 as broadcasted from the foreign broadcast devices 20, 30 (see Fig. 6). Such foreign data packets D2, D3 are indicative of information pertaining to second/third aircraft 2, 3 (see Fig. 6), and the broadcast device 10 is configured to calculate a collision probability between the first aircraft 1 and the second/third aircraft 2, 3 based on the information pertaining to the first aircraft 1 and based on the received information pertaining to the second/third aircraft 2, 3.

Specifically, the foreign data packets D2, D3 comprise foreign compressed position data PD2', PD3' with foreign compressed latitude data PD2' _LAT, PD3'_LAT, foreign compressed longitude data PD2'_LON, PD3'_LAT, and foreign altitude data PD2_ALT, PD3_ALT.

After reception of a foreign data packet D2, D3, the foreign compressed position data PD2', PD3', in particular the foreign compressed latitude data PD2'_LAT, PD3'_LAT and the foreign compressed longitude data PD2'_LON, PD3'_LON is uncompressed in the following way:

1. Latitude position data PD2_LAT, PD3_LAT is uncompressed from the received PD2'_LAT, PD3' _LAT and the own latitude data PD1_LAT. This can be done due to the fact that the latitude grid (i.e. the latitudinal extent of the local grid cells) is uniform and that the position data PD1 (and thus PD1_LAT) is known.
2. The longitude resolution divider is determined by calculating D_LON(LAT) based on the now known latitude position data PD2_LAT, PD3_LAT as computed in step 1 and based on the approximation discussed above with regard to Fig. 4.
3. Longitude position data PD2_LON, PD3 _LON is determined from the received compressed longitude position data PD2'_LON, PD3'_LON, the determined longitude resolution divider D_LON(LAT) from step 2, and the own uncompressed longitude data PD1_LON as known to the receiving broadcast/ receiver device.

In these uncompression steps, it is checked whether a mathematically possible position in the same local grid cell or in adjacent local grid cells results in a lower distance. The solution with the lowest distance is taken as the correct one.

If the collision probability exceeds a certain threshold, a collision warning ("TRAFFIC WARNING") is issued to the pilot by means of an audiovisual display 15 of the broadcast device 10. This enhances the safety. A separate display unit 18 helps to improve the pilot's situational awareness by displaying the first ("own") aircraft 1 in the center of three circles and the second/third ("foreign") aircraft 2, 3 with their courses and velocities (arrow lengths, not to scale), also see Fig. 6. The display unit 18 can also be part of the broadcast device 10 (not shown).

This enables the use of the broadcast device 10 for collision avoidance with an improved situational awareness as well as the creation of a system for aircraft collision avoidance comprising a first broadcast device 10 at a first aircraft 1, a second broadcast device 20 at a second aircraft 2, and a third broadcast device 30 at a paraglider pilot. Such a system is shown in Fig. 6. The first aircraft 1 at position P1 is equipped with a broadcast device 10 as described above. The second aircraft 2 at position P2 is equipped with a broadcast device 20 which is - except for a different identifier ID2 - the same as the broadcast device 10 as described above. The third aircraft 3 (paraglider and pilot) at position P3 is equipped with a broadcast device 30 which is similar to the broadcast devices 10 and 20 as described above. As a difference to these, however, this third broadcast device 30 cannot receive data packets but is broadcast/transmit only.

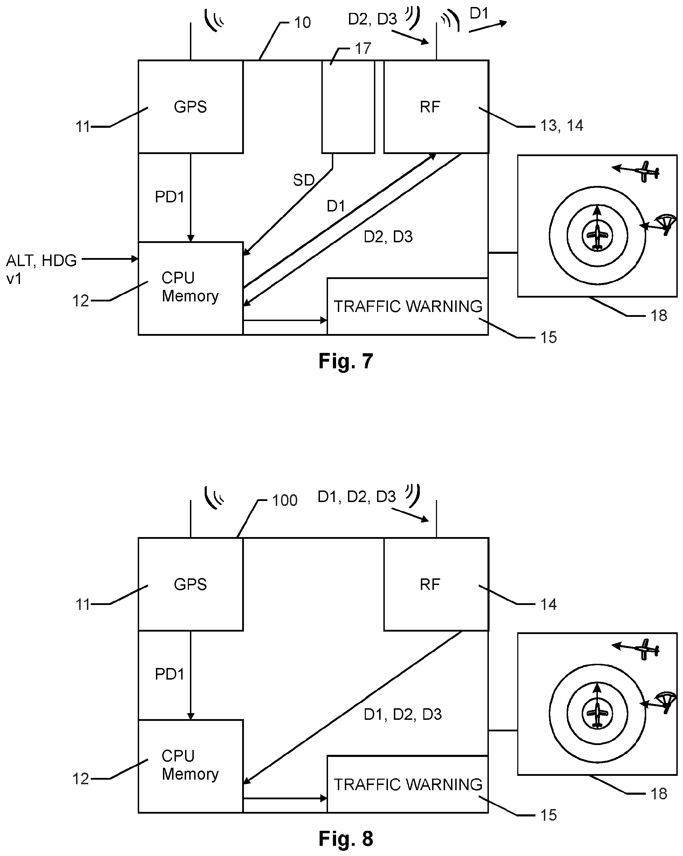

A non-sending/receiving-only ground-based receiver station 40 forwards received data packets D1, D2, and D3 to the internet/air traffic control (see Fig. 8 for such a receiver device 100).

The first broadcast device 10 wirelessly broadcasts information pertaining to the first aircraft 1 in the form of data packets D1. The second broadcast device 20 wirelessly broadcasts information pertaining to the second aircraft 2 in the form of data packets D2. The third broadcast device 30 wirelessly broadcasts information pertaining to the third aircraft 3 in the form of data packets D3.

Because the first broadcast device 10 receives the data packets D2, D3 as broadcasted from the second and third broadcast devices 20, 30 (and vice versa, except for the third broadcast device 30), a collision probability is easier to derive by taking the information pertaining to the first, second, and third aircraft 1, 2, 3 into account. This enhances safety and the pilots' situational awareness. Due to the invention with its broadcasting of compressed position data PD1', PD2', and PD3', bandwidth is saved and additional information can be broadcasted.

Further, the first and second broadcast devices 10, 20 relay information received from each other and from the third broadcast device 30. Thus, a mesh network is created between the broadcast devices. In this mesh network, it is ensured that the relaying of data packets does not interfere with the resolution of ambiguities that could result from relayed data packets with an origin above the radio range.

Fig. 7 shows a broadcast device 10 according to an embodiment of the invention and a display unit 18, the broadcast device 10 comprising a positioning device 11, a control unit 12, and a radio transceiver 13, 14. The broadcast device 10 is mostly identical to the one shown in Fig. 5 described above with the following differences: The broadcast device 10 is configured to generate the data packet D1 in such a way that the data packet D1 comprises a pair $c1 = (e1, m1)$ with an exponent e1 being a natural number and with a mantissa m1 being a natural number. The pair c1 is indicative of velocity data VD1 of the first aircraft 1, specifically a value v1 is indicative of a velocity vector magnitude of the first aircraft. This velocity vector magnitude can be received by the control unit 12 together with ALT and HDG from onboard navigation systems and/or it can be calculated from position updates of the aircraft. The mantissa m has a bit width of $N_{m1} = 7$ bits and the exponent e has a bit width of $N_{e1} = 2$ bits, wherein

$$v1 = 2^{e1} * (2^{Nm1} + m1) - 2^{Nm1}.$$

The bit widths $N_{m1}$ and $N_{e1}$ are selected such that a total bit width $N1 = N_{e1} + N_{m1}$ of the pair c1 is smaller than a total bit width of the value v1. A linear scaling factor A1 representing the physical unit "knots" is used for computing v1 according to $A * v1 = v_{aircraft}$. Please see chapter 2.1 of the "AMP protocol description" as well as Figs. 1a-1c for details.

The same applies mutatis mutandis for the foreign broadcast devices 20 and 30 as well as for the foreign data packets D2, D3 indicative of information pertaining to second/third aircraft 2, 3, respectively.

In other words, the foreign data packets D2, D3 each comprise a pair $c2,3 = (e2,3, m2,3)$ with an exponent e2,3 being a natural number and with a mantissa m2,3 being a natural number. The pair c2,3 is indicative of a value v2,3,

wherein the mantissa m2,3 has a bit width of $N_{m2,3}$ and wherein the exponent e2,3 has a bit width of $N_{e2,3}$, and wherein $v2,3 = 2^{e2,3} * (2^{Nm2,3} + m2,3) - 2^{Nm2,3}$. The bit widths $N_{m2,3}$ and $N_{e2,3}$ are selected such that a total bit width $N2,3 = N_{e2,3} + N_{m2,3}$ of the pair c2,3 is smaller than a total bit width of the value v2,3. A linear scaling factor A2,3 representing the physical unit/ resolution for the encoded numerical value v2,3 is also used as discussed above. The pair c2,3 as comprised in the foreign data packet D2,3 is indicative of foreign velocity data VD2,3 of the second/third aircraft 2,3, specifically the value v2,3 is indicative of a velocity vector magnitude of the second/third aircraft 2,3 (i.e. an absolute value of the aircraft's velocity).

Then, the broadcast device 10 is configured to compute (decode) the foreign velocity data VD2,3 using the received pair c2,3, specifically to compute the velocity vector magnitude v2,3 of the second/third aircraft 2,3 using the pair c2,3 as received in the foreign data packets D2,3. Thus, bandwidth is saved while a wide range of values v2,3 (i.e., velocity vector magnitudes) can be transferred. This is particularly helpful for aircrafts 1, 2 and 3 with widely varying velocity vector magnitudes such as a jetplane, a sailplane/glider and a paraglider.

Fig. 8 shows a receiver device 100 according to an embodiment of the invention and a display unit 18, the receiver device 100 comprising a positioning device 11, a control unit 12, and a radio receiver 14. The receiver device 100 is mostly identical to the broadcast device 10 shown in Fig. 7 with the following differences: Instead of a radio transceiver 13, 14, the receiver device 100 comprises a radio receiver 14 only and has therefore no capabilities to transmit data packets. Also no ALT, HDG, v1, and SD data is fed to the control unit 12 because no data packets are sent from the receiver device 100, but data packets D1, D2, and D3 are received by radio receiver 14. The receiver device 100 can therefore be used as a non-sending/receiving-only ground-based receiver station 40 as shown in Fig. 6.

The data packets D1, D2, and D3 as transmitted by the respective broadcast devices 10, 20, 30 are each indicative of information pertaining to a first/second/third aircraft 1, 2, 3 as discussed above (ID1,2,3, compressed latitude_1,2,3, compressed longitude_1,2,3, altitude_1,2,3, aircraft type_1,2,3, ground track/ heading_1,2,3, ground speed_1,2,3, climb rate_1,2,3, turn rate_1,2,3, movement mode_1,2,3, time_1,2,3 and other, see sections 3.1.1 and 3.1.2 of the "AMP Protocol Description" for a list).

Because the receiver device 100 is configured to uncompress the compressed position data PD1', PD2', and PD3', and to compute (decode) the foreign velocity data VD1,2,3 using the received pairs c1,2,3 in the data packets D1,D2,D3, the positions and a wide range of velocities v1,2,3 can be transferred while saving bandwidth.

Definitions:

Throughout the application documents, the term "aircraft" relates to all VFR-operated or VFR-operatable manned and teleoperated or automated unmanned flying or flyable objects such as gliders, towplanes, helicopters, parachutes, dropplanes, hanggliders, paragliders, single-engine piston planes, multi-engine piston planes, jet planes, (hot air) balloons, airships (such as, e.g. blimps), and UAVs (unmanned aerial vehicles such as drones).

The term "pilot" refers to either the human on board the aircraft or on the ground or on board another aircraft and supervising or piloting the aircraft from a distance. Additionally, in the case of fully automated systems, the term "pilot" may refer to, e.g. a flight control system.

The term "broadcast" relates a method of transferring a message (or here, the data packet) from a single transmitter to all recipients within radio range simultaneously, e.g. non-connection based. This is in contrast a point-to-point (e.g. connection or link-based) method in which a single sender communicates with a single receiver. Whenever the term "transmitter" or "sender" is used, it shall relate to "broadcaster".

Aircraft Motion Prediction (AMP) Protocol Description

1. Introduction

This section describes a possible implementation of the Aircraft Motion Prediction (AMP) Protocol, i.e. the structure and generation of a data packet used for the invention. All information in this section is to be treated in a non-limiting manner but as examples/ advantageous embodiments only. The AMP Protocol enables the following applications:

- Situation awareness
- Traffic monitoring
- Collision avoidance
- Tracking
- Identification

The following description omits the description of the physical and data link layers, as they are implemented by standard electronic components which are known to the skilled person (e.g. nRF905 from Nordic Semiconductors).

1.1. Coordinates Datum

The WGS-84 standard is used throughout. Elevation is referenced to the WGS-84 ellipsoid surface (i.e. not the geoid, not MSL). Longitude and latitude are encoded in degrees, scaled 1E-7. South and West are negative.

1.2. Timing and Synchronization

To support a large number of broadcast devices, radio access is organized in time frames. A single time frame has a duration of, e.g. 1 s. Global time is available to any broadcast device via the positioning device. The number of data packets a broadcast device is allowed to send per time frame (i.e. the duty cycle) is regulated by law (e.g. 1% over one hour). All data packets per time frame have the same information contents (such as position, speed etc.) but can differ in timestamp, protocol version used, etc. (see section 2.4 below).

Transmission are organized in a plurality of transmit-windows per single time frame such that a single data packet is transmitted per transmit-window. As an example, with 1 sec time frames and 2 transmit-windows per time frame, the broadcast device nominally transmits a data packet once in each of these two transmit-windows. The nominal transmit/update rate is thus 2 data packets per second in this example.

Send timing is random within the transmit-window. If a packet collision is detected, a broadcast device retries after a random time delay. If the transmit-window ends before a successful transmission is made, the data packet is lost.

2. Algorithms and Methods

2.1. Extended Range Encoding

Extended Range Encoding (ERC) is a nonlinear encoding technique to encode a value with a large input range efficiently, using less bandwidth (bits) compared to a simple linear encoding. Due to the nonlinearity of the approach, it sacrifices (absolute) resolution at higher values (i.e. it utilizes a larger quantization interval), but achieves a much larger value range. The relative resolution (i.e. the ratio between the quantization interval and the encoded value) can be tuned to suit the intended application.

The method is comparable to floating point representations. The difference is that ERC uses integers and is flexible to adjust to the individual values and fields in the AMP protocol. ERC is parametrizable:

- Total number of bits N to use for code points (i.e. ERC representation of a numerical value v)
- Number of bits $N_m$ to use for mantissa m, and, derived from N and $N_m$, the number of bits $N_e$ to use for the exponent e.
- Whether negative values v are allowed, or only non-negative. Signed values are encoded by using the most significant bit of the exponent as a minus sign.
- A linear scaling factor A for every field representing the physical unit/ resolution for the encoded numerical value

Assume the pair c = (e, m) is a code point indicative of a to-be-transmitted value v, the code point comprising an exponent e and a mantissa m. Both e and m are non-negative integers, while v is a non-negative real number with a physical unit determined by the scaling factor A. The mantissa m has a bit width of $N_m$. The total bit with of c is N, thus the bit width of the exponent e is $N_e = (N-N_m)$.

For better readability, $v^*$ is defined as $v^* = ROUND(v / A)$ as the result of the value divided by the scaling factor, rounded to the nearest integer. Conversely, let $v = A * v^*$. Then, the numerical input value v encoded by code point c is given by:

$$v^* = 2^e * (2^{Nm} + m) - 2^{Nm}$$

$$v = A * v^*$$

The reverse operation for computing c = (e, m) from v is defined by the following algorithm:

1. Let

$$v^* = ROUND(v / A)$$

2. Compute the exponent: Find the largest e from the set of integers $0...(2^{Ne} - 1)$ that satisfies

$$v^* >= 2^{Nm} (2^e - 1)$$

3. Compute the mantissa:

$$m = (v^* + 2^{Nm}) / 2^e - 2^{Nm}$$

The code point c = (e, m) can be represented as the binary concatenation of the exponent e and the mantissa m, yielding the binary representation of c:

$$c_{binary} = e << N_m \mid m$$

where "|" denotes the "bitwise OR" operation and "<<" the "shift left" operator.

An example for $N_e = 2$, N = 9 yields:

- The encodable value range increases from 0...511 (for a 9 bit integer and for a linear mapping with $2^9-1=511$) to 0...1912 (for a 9-bit ERC mapping with $N_e = 2$, $N_m = 7$, and with $v_{max} = 2^3 (2^7 + 127) - 2^7 = 1912$ with $e = 2^2-1$ and $m = 2^7-1$), see Fig. 1a.

- The absolute resolution decreases (or the quantization interval increases) at v = 128, v = 128+256, v = 128+256+512 = 896 and so forth, see Fig. 1b.
- The relative quantization error (i.e. the quantization step divided by the encoded value) decreases with higher ERC encoded values v, see Fig. 1c.

The parametrization in N, $N_e$ therefore defines the range of encodable values v and how quickly the resolution degrades with larger values. In addition to these parameters, the AMP protocol also applies a linear scaling A to every field which defines the physical unit/ resolution for the encoded numerical value v (e.g. 0.1 m/s for ground speed).

2.2. Adaptive Coordinate Compression

Adaptive Coordinate Compression (ACC) is a system to reduce the required bandwidth for wirelessly transmitting a 2D global position, expressed in degrees latitude and longitude (position data PD), exploiting that sender and receiver are necessarily local due to radio range limitations. This is done by compressing the coordinates and determining compressed position data (PD') with a smaller bit width (S') compared to a bit width (S) of the uncompressed position data (PD). Unlike "Adaptive Coordinate Truncation (ACT)" as disclosed in PCT/EP2021/074358 filed on 2021-09-03, the contents of which is hereby incorporated by reference in its entirety, ACC does not rely on a truncation or omission of most and/or least significant bits of the uncompressed position data (PD) but rather on a scaling operation, a rounding operation, and a gridding operation of the uncompressed input values to yield the compressed position data. Unlike in ACT, this approach increases accuracy and is more generally applicable, as, e.g., scaling and gridding factors can be freely adjusted so that they can be adapted to the requirements in the best possible way. However, similar to ACT, also ACC introduces ambiguity and reduces the resolution of the transmitted position. ACC balances these tradeoffs with its benefits carefully and can yield more accurate results than ACT.

To transmit positions P1, the WGS-84 geodesic system is used for expressing global coordinates. The base units are longitude and latitude, scaled to 1E-7° (before compression, "raw format"). Signed integers are used, north and east are positive, respectively. Altitude is relative to the ellipsoid (i.e. not the geoid) and not compressed, i.e. not part of this algorithm.

In ACC, the WGS-84 coordinate space is divided into grid cells, where the grid dimension ("grid size") is chosen to be well larger than the maximum expected radio range. A sender transmits its position relative to the local grid cell origin. A receiver can determine the grid cell that results in the lowest distance to the sender. By the principle of locality, this must then be the true solution, since other solutions are not physically possible due to the radio range.

The situation is depicted in Fig. 2: A receiver ("x") determines the correct position (black solid dot) by proximity. Due to properties of the grid, any of the open dot positions are in principle also correct decodings and can only be discarded due to the principle of locality.

ACC uses a grid that is not uniform: If it were, the effective grid size would contract towards the poles for the longitude dimension. As a consequence, the longitudinal cell width would drop below the radio range at some point; a receiver could then no longer unambiguously determine the sender's position. Conversely, to maintain a sufficient longitudinal grid size, longitude would require more bits in the transmission.

ACC addresses this by dynamically adapting the longitude grid size with higher/ lower latitudes. Hence the "A" for "adaptive" in ACC.

2.2.1. Compression in ACC, scaling and gridding

The scaling and gridding is created by for longitude and latitude separately, i.e. it is decomposed into two one-dimensional (1D) operations. Each ID operation is defined by three sequential operations: Scaling, rounding, and gridding. Integer operations are used throughout. Two parameters define the compression:

- The resolution divider (D) defining the scaling operation
- The modulus (m) defining the grid size G after scaling.

In other words, the resolution divider is used for scaling the raw coordinate which, after rounding, defines the new (reduced) resolution. The modulus is then used for gridding.

Both parameters shall by convention be positive integers. Separate parameters D_LON, m_LON, D_LAT, m_LAT are defined as described below. The one-dimensional compression algorithm is defined as:

$$c\_comp = \frac{\left(c\_raw + \frac{D}{2}\right)}{D} \bmod m$$

where c raw is the input, raw coordinate (either LAT or LON) expressed as signed integer with a predefined scaling factor (e.g. 1°E-7 per step), where c_comp is the resulting, compressed coordinate, where the fractions represent integer divisions and where "mod" is the modulo operator. Note how the rounding is achieved by adding D/2 before the division (i.e., the scaling).

Note: The modulo operator "mod" for gridding is herein used in its "mathematical definition" where the result is always a non-negative integer, as used e.g. in Python. For instance: (-2) mod 3 = 1. Certain programming environments (e.g. C) use what Wikipedia (https://de. wikipedia.org/wiki/Division mit Rest#Modulo as accessed on 2022-11-15) calls the "symmetric variant" instead, which then requires special treatment for negative raw coordinates. This is known to the skilled person and shall not be further described herein.

Note: The integer division is herein used in its variant truncating to the next lower integer, i.e. -7/5 = -2 (floored division). As with mod, other programming environments use different definitions of the integer division, i.e. truncating towards zero (C, truncated division), which can then require special treatment.

The modulus m defines the range of the gridding operation, i.e. the compressed coordinate can take values in the range of 0 ... m-1. For practical purposes, the modulus m is advantageously chosen as a power of 2 (e.g. $2^{20}$), thereby using the available storage space (e.g. 20 bits) maximally and also decreasing computational effort since efficient bit-mask and bit-shift operations can be used for the gridding operations.

Example: Given a resolution divider of D = 10 and a modulus of m = 32, compressing the non-negative coordinate c_raw yields as compressed coordinate c_comp:

$$c\_comp = \frac{c\_raw + 5}{10} \bmod 32$$

Next, the parametrization (m, D) of the grid is derived given the physical requirements (radio range). First, it is noted that the grid size G is given by the parametrization as follow:

$$G = m \, D \, res\_raw$$

where res_raw is the resolution of the raw coordinates in meters at the equator. Assuming a simplified Earth model (perfect sphere, 40'000km circumference) and the standard scaling of raw coordinates used herein (1°E-7 per step), res_raw is given by

$$res\_raw = \frac{40'000 \text{ km } 10^{-7\circ}}{360°} = 1/90 \text{ m } = 0.0111 \ldots \text{ m}$$

For the latitude, this is the actual, local resolution throughout. For longitude, the local resolution decreases continuously towards the poles. Note that the simplified Earth model does not lead to inaccuracies in AMP - it is only used to determine the grid parameters.

Next, the resolution divider D can be calculated from the available storage space (i.e. compressed bit width of the to-be-transmitted compressed position data PD1') and the minimum required grid size G_min:

$$D = \text{ceil}\left(\frac{G\_min}{m \, res\_raw}\right)$$

where G_min is the minimum required grid size, res_raw the resolution of the raw, uncompressed coordinates (see above), and m is the modulus defining the compressed bit width of the to-be-transmitted compressed position data PD1'. The ceiling function ceil() returns the smallest possible integer value which is greater than or equal to the given argument. It is used to retrieve a grid size G that is not smaller than G_min. Advantageously, the grid size G is larger than the radio range, in particular by a factor of 2 or more.

For latitude encoding in AMP, the values G_min = 600 km and m_LAT = $2^{20}$ are selected, thus yielding G = 605.844 km and D_LAT = 52. For a radio range of 300 km, the grid size is therefore larger than 2 times the radio range.

For longitude encoding, the resolution divider D_LON needs to adapt to the latitude to keep the grid size above G_min towards the poles. Since the meridians converge with 1/cos(LAT) towards the poles, the optimal adaptation is straightforwardly achieved by adopting the above formula to:

$$D\_LON \, (LAT) = \text{ceil}\left(\frac{G\_min/\cos(LAT)}{m\_LAT \, res\_raw}\right)$$

This achieves an (almost) uniform resolution and grid size throughout all latitudes. Small deviations are due to the conversion to integer, as depicted in Fig. 3.

2.2.2. Approximating D_LON

The above approach for longitude encoding is impractical on low-end embedded systems since both the floating-point division as well as the evaluation of the cosine function are computationally expensive. This is also true for the disambiguation on the receiver side, as it needs to be calculated for every received aircraft.

Therefore, a piecewise-linear approximation of D_LON is developed, taking the following form:

$$D\_LON = a\_0 + \sum_{n=1}^{N} a\_n \, \text{thr}(|LAT| - LAT\_n)$$

where a_0 is a constant, a_1 ... a_N are approximation coefficients, LAT_1 ... LAT_N are latitude thresholds, |x| is the absolute value of x, and thr() is the threshold function defined as

$$\text{thr}(x) = \begin{cases} x & \text{if } x > 0 \\ 0 & \text{else} \end{cases}$$

The coefficients a_1 ... a_N are restricted to powers of two (positive or negative) by convention, such that the multiplications can be efficiently performed as bit shift operations. The thresholds are restricted to integers between 0 and 90 to further speed up computation without substantially sacrificing on the accuracy. Coefficients a_0 ... a_N and thresholds LAT_1 ... LAT_N are found through an optimization search:

| n | latitude threshold LAT_n | approximation coefficient a_n |
|---|---|---|
| 0 | | 52 |
| 1 | 12 | $2^{-1}$ |
| 2 | 39 | $2^0$ |
| 3 | 56 | $2^1$ |
| 4 | 57 | $2^2$ |
| 5 | 73 | $2^3$ |
| 6 | 79 | $2^4$ |
| 7 | 82 | $2^5$ |

This yields an approximation that is very accurate for latitudes up to about 85°.

Above this threshold the approximation starts to fail, as expected from the optimization setup. This is considered acceptable. Fig. 4 shows the nominal deviation of the approximated resolution divider D_LON, the resulting longitudinal grid size G as a function of the latitude, and the longitudinal resolution as a function of the latitude.

This approximation is particularly well-suited for 8-bit systems as it can be implemented in pure 8-bit instructions up to 78.9999° degrees latitude. For latitudes of 79 degrees and higher, the divider is larger than 255, hence the algorithm can no longer be computed in 8-bit arithmetic. Another practical consideration is to ignore the terms for n = 5 ... 7 on lower end systems, capping the maximum latitude at 73°. This is enough to cover all of Norway or Iceland.

Note: While the invention in its most general form is not limited to the specific approximation given above, in a real world implementation, every user needs to agree to a single approximation and needs to stick exactly to this agreed-upon approximation.

2.2.3. Receiving ACC

A receiver can perform the following steps when receiving ACC coordinates:

1. Uncompress latitude from the received compressed latitude data; this can be done due to the fact that the latitude grid (i.e. the latitudinal extent of the local grid cells) is uniform and that the own uncompressed latitude data is known to the receiving broadcast/ receiver device.

2. Determine longitude resolution divider by calculating D_LON(LAT) as given above and from the latitude data as computed in step 1.

3. Uncompress longitude from the received compressed longitude data, the determined longitude resolution divider D_LON(LAT) from step 2, and the own uncompressed longitude data as known to the receiving broadcast/ receiver device.

Compared to the older ACT design mentioned above which relies on bit trunctions, ACC achieves a much more precise tracking of the desired grid parameters over the latitude with much smaller deviations of the local resolution, while not being computationally more demanding.

2.3. Enhanced-Privacy Random ID

To improve the ability to conceal an identity of a broadcast device while maintaining consistency for collision avoidance, the AMP protocol features Enhanced-Privacy Random ID (EPRID).

The method provides a chain of identifiers (IDs) that are broadcasted in a data packet so that signals can be correlated over a short time (continuous reception), but not over a long time (with missed data packets). A broadcast device's ID (i.e. the current identifier $ID_k$ for the time $T_k$) thereby changes randomly over time: A randomly obtained number RON is generated, e.g. by randomly selecting it from a finite set of numbers or randomly generating it, e.g. by means of a true random number generator or some sufficiently seeded pseudo random number generator (PRNG). This RON is then mixed together with the previous identifier $ID_{k-1}$ by means of a cryptographic hash function to generate the current identifier $ID_k$ which is therefore not equal to the previous identifier $ID_{k-1}$. The subsequent randomly obtained number (i.e. $RON_k$) is transmitted as part of the data packet, such that a receiver can - upon receipt of the next data packet - correlate a then received $ID_{k+1}$ to the previously received $ID_k$ without effort. The RON is advantageously chosen from the range $0...2^{Ne} - 1$, where Ne is the number of random bits used for generating the RON.

If a receiver continuously receives at least one data packet per distinct RON/ID pair, then it can readily derive the next ID from this.

However, if a receiver loses one or more data packets, it must start the observation from new since with unknown RON, the new ID cannot be related to the old one. Alternatively, the receiver can try to "guess" the RON. Guessing is rather fast for one or a few missed data packets (only a few bits of randomness were added), but the complexity increases exponentially with the number of bits that need to be guessed. The capability of a receiver to successfully calculate the correct sequence of RONs is effectively limited by two effects:

1. Computational feasibility: Especially when tracking hundreds of targets, e.g. in a wide-area receiver network, or when limited processing power is available, as is often the case in embedded (on-board) systems.
2. Ambiguity: When the number of random bits added (i.e. the amount of randomness introduced by each RON times the number of missed ID-updates) approaches the number of total bits of the ID, the ambiguity increases to the point where a unique reconstruction is no longer possible: There is always a sequence of RONs that generate any given ID from any other.

Example: The random ID has a bit width of 32 bits. An 8 bit value is used for the randomly obtained number RON. Note: The amount of randomness in the RON can be varied, 2 bits are advantageously chosen.

2.3.1. Prerequisites

Advantageously, a cryptographic hash function comprising bitwise XOR-/and bitshifting-operations is used for mixing the randomly obtained number $RON_{k-1}$ with the previous identifier $ID_{k-1}$ for generating the current identifier $ID_k$. Such a cryptographic hash function HASH() thus is of the form $ID_k = HASH(RON_{k-1}, ID_{k-1})$. HASH() is deterministic, fast to compute, small changes of the input lead to large changes of the output, and it is computationally infeasible to find the reverse operation.

2.3.2. Sender

On the sender, EPRID comprises the following steps:

1. Set k=1, initialize $ID_1$ by choosing a random unsigned 32-bit integer and/or using a fixed value which is e.g. stored in a non volatile memory.
2. At each time $T_k$, randomly choose a $RON_k$ from the set $0...2^{Ne}-1$.
3. Use the pair $(RON_k, ID_k)$ in AMP data packet broadcasts.
4. Advantageously after between 2 and 10 seconds, at time $T_{k+1}$, increment k by 1 and compute the new $ID_k$ from the previous $ID_{k-1}$ and the $RON_{k-1}$: $ID_k = HASH(RON_{k-1}, Id_{k-1})$;
5. Go to step 2.

The duration between the ID updates (step 4) and the number of bits to use for the randomness (Ne) can be chosen by the sender to trade off privacy vs. trackability. The default value is 10 s, 1 s is the minimum value. The default value for Ne is 2, the minimum 1, the maximum 8. The broadcast device may adapt the interval in flight. The ID update may happen at any time, but only after the RF time frame is completed.

2.3.3. Receiver

The receiver of a packet with a (RON, ID) pair performs the following steps:

1. Initialize an internal memory store for storing a list of (ID, ID') pairs, referenced as ID[i], ID'[i], wherein i is a natural number and refers to the i-th entry in the memory store.

2. When receiving a (RON, ID) pair, check the memory store if an entry i exists with ID = ID[i]. If a match is found, assume the new data packet originates from a known sender with a known current identifier ID. Break.

3. Else, check the memory store if an entry i exists with ID = ID'[i]. If a match is found, assume the new data packet originates from a known sender with an updated current identifier ID and update the memory store entry to (ID, HASH(RON, ID)). Break.

4. Else, assume the new data packet originates from an unknown sender. Add the pair (ID, HASH(RON, ID)) to the memory store.

5. Continue with step 2.

If no matching ID is found in step 3, a receiver may optionally employ a deeper search, i.e. over multiple ID updates, assuming that it has received EPRID-enabled data packets before. This requires a brute-force search. This is feasible mostly for ground-based receivers. Airborne devices for collision avoidance purposes will probably not do this, e.g. due to computational limitations of embedded systems.

2.4. Dynamic Message Versioning

Dynamic Message Versioning (DMV) is a method for simplifying data packet protocol updates (e.g., changing the precision, layout, size, or semantics of the contents/values, or modifying other aspects of the broadcasted data packets such as modulation, error correction, encryption, preambel etc.) while eliminating the putative need for a hard firmware expiration mechanism that may be present in prior art broadcast devices: The fundamental nature of such a distributed system as the broadcast devices according to the invention is that all participating nodes/broadcast devices need to understand the updated data packet protocol to retain compatibility. With the mentioned firmware expirations, prior art broadcast devices that did not receive a recent firmware or protocol upgrade stopped operating at a predefined date. Thus, the active firmware and thus data packet protocol versions at any given date could be controlled, allowing a concerted, global protocol update, e.g. once every year. However, this is only possible at the cost of manual user intervention for all devices, which is sometimes cumbersome and expensive, particularly in complex aircraft avionics systems.

DMV-enabled broadcast devices do not require such a firmware expiration mechanism while still allowing the protocol to change and improve, e.g. subject to the capabilities of involved broadcast devices. A DMV-enabled broadcast device can therefore be made backward-compatible indefinitely, i.e. it is then capable of receiving and sending AMP data packets of any (lower) version. This makes an older broadcast device visible to newer ones automatically. For vice-versa visibility, DMV can dynamically balance the use of different versions of the data packet protocol based on the capabilities of other receiving broadcast devices in the vicinity of the transmitting broadcast device. The maximum protocol version a DMV-enabled broadcast device is capable of receiving, processing, and transmitting is published in the "ver_max" field in the AMP data packet header and is thus transmitted with every AMP data packet (see below). A transmitting broadcast device can then fallback to a lower protocol version if a receiving broadcast device only understands this.

2.4.1. DMV Operating Principle

- Every transmitting DMV-enabled broadcast device ("sender") updates and maintains a list of nearby receiving DMV-enabled broadcast devices ("receivers") and their published maximum supported protocol version ( "ver_max"-field in the header section of an AMP data packet, see section 3.1.1 below). Note that this maximum supported protocol version may deviate from the actual version used in a specific data packet ("ver"-field in the header section of an AMP data packet, see section 3.1.1 below).

- For every AMP data packet that is transmitted, the sender chooses the protocol version ("ver") based on this list. Heuristics are applied to determine this protocol version used for transmissions, thus maintaining a backward-compatible minimum connectivity with older clients, albeit at a lower update frequency. The parameters used thereby may be dynamically adapted over time: For instance, a lower data packet protocol version may get a higher priority and thus be transmitted more frequently, e.g., at least once every 2 seconds, immediately after a new AMP-protocol release. This allows as many clients as possible to catch up with the respective update. After a transition period, for example after 4 to 8 weeks, the use of lower-versioned AMP data packets may gradually be reduced, e.g., to at least once every 6 seconds.

- The most compatible protocol version is 0, compatible with all DMV-enabled and possibly even prior art broadcast devices that are not DMV-enabled. A base rate (e.g. once every 15 seconds) of protocol 0 data packets can be used to remain compatible indefinitely.

2.4.2. Implementation

In this section, the DMV-enabled broadcast device under consideration is denoted as "host" and nearby DMV-enabled broadcast devices are referred to as "clients". This section explains how the host selects the protocol version for broadcasting data packets based on data packets received by the host from the clients.

Note that both roles (host and client) are usually present in any DMV-enabled broadcast device, such that this rule applies symmetrically for every client as well. Non-senders (e.g. ground-based receiver stations) have no means to publish their DMV-capabilities. It is expected that these are updated frequently and/or support the latest protocol version at any time or at least with a short delay after a protocol/firmware update becomes available. Non-receivers (e.g. paraglider beacons) can transmit a predefined value for "ver_max", thus indicating that they cannot receive data packets. Thus, they can then be excluded from DMV.

Let i be an index for the list of received AMP clients, as stored in the host's memory, with i being a non-zero natural number and i = 1...Nc with Nc being the total number of clients from which data packets are received. Clients from which no data packets are currently received are removed from this list. Let then "$ver\_max_i$" be a client's maximum supported AMP protocol version, as last received in the header section of a data packet sent by the client i. Hereby, it is assumed that "$ver\_max_i$" does not change over time of operation of client i, i.e. during broadcasting of data packets. This is because firmware and thus protocol updates are usually not performed during operation of the broadcast device.

Let m[i] then be the count of missed (i.e. unreceivable) data packets for each client i, i.e. data packets that the respective client i cannot have received (e.g. due to the data packet not being sent) or data packets that the respective client i cannot have parsed (e.g. due to the data packet having a "ver" > "$ver\_max_i$"). This number-count m[i] is derived at the nominal AMP transmit or update rate taking transmit-windows into account: In other words, if the host deliberately does not send a data packet at all (e.g. due to RF collision or bandwidth management), this unsent data packet counts as a miss for all clients i and m[i] += 1 for all i = 1...Nc.

Because a plurality of transmit-windows is used per time frame (see section 1.2 above), the protocol version "ver" of the to-be-broadcasted data packet is determined before the start of each transmit-window. Whatever happens during the transmit-window's duration does not influence the transmission.

The array m[i] of missed data packets for each client i is then updated as follows:

1. At the beginning of any transmit-window, increment m[i] for every client i by 1.
2. If a data packet is sent successfully during the transmit-window: For every client i, set m[i] to zero for client i if the transmitted version "ver" as sent by the host is smaller than or equal to client's maximum supported version "$ver\_max_i$". Thus, if a client i can receive and process the data packet, m[i] = 0 for this respective client i.

Before the beginning of a transmit-window, the protocol version "ver" to be used for the broadcasted data packet in this transmit-window is determined as follows:

1. Let the desired client update interval $t_{cli}[i]$ for each client i be:

$$t_{cli}[i] = f(D[i], ver\_max_i, M_i)$$

where D[i] is a norm function indicative of the distance between the host and the client i, $ver\_max_i$ is the maximum supported protocol version of the client i, $M_i$ is indicative of metadata available for the client i, e.g. aircraft type or firmware version, and f() is a dynamic client update function. For a definition of the dynamic client update function f(), see section 2.4.3 below.

2. If the client i is in conflict with the host (i.e. if the client i is in danger of a collision with the host), set $t_{cli}[i]$ to 1.

3. Let the send gap g[i] for client i be the discrepancy between the number of missed data packets m[i] by the client i and the desired client update interval $t_{cli}[i]$. For any client i, the send gap g[i] is then given by

$$g[i] = m[i] - t_{cli}[i]$$

Note that the send gap g[i] starts negative and continuously increases if no client-supported transmission has been made. A gap of 0 or higher indicates that the desired client update interval $t_{cli}[i]$ is not fulfilled and therefore a need for transmitting a supported data packet to the client i arises.

4. If no g[i] is 0 or higher for all clients i, select the maximum supported protocol version of the host. Break.

5. If some or all g[i] are non-negative, i.e. 0 or higher (i.e. if the desired client update interval $t_{cli}[i]$ is missed for some or all clients i), select the protocol version "ver" as the minimum of "ver_max$_i$" of all clients with non-negative g[i].

### 2.4.3. Dynamic Updates

The desired client update interval $t_{cli}[i]$ of supported data packets for each client i is not fixed but may be adapted to the current situation in the population of broadcast devices, e.g. based on active firmware/ protocol versions and/ or based on situational parameters. This is reflected in the dynamic client update function f(D[i], ver_max$_i$, M$_i$) used for deriving $t_{cli}[i]$ as discussed above. The following basic rules apply:

- A base desired client update interval is based on the vehicle type M$_i$ of the client i. Examples are:

  ◦ Hang glider, paraglider: 4: If 4 data packets have been missed by client i (i.e. if no supported data packet is received by client i for 4 transmit-windows), then transmit a supported fallback data packet (i.e. with a compatible protocol "ver") to the client i.
  ◦ UAV: 2: If 2 data packets have been missed by client i (i.e. if no supported data packet is received by client i for 2 transmit-windows), then transmit a supported fallback data packet (i.e. with a compatible protocol "ver") to the client i.
  ◦ All others: 1: If 1 data packet has been missed by client i (i.e. if no supported data packet is received by client i for 1 transmit-window), then transmit a supported fallback data packet (i.e. with a compatible protocol "ver") to the client i.

- If a client i signals no RX capabilities (i.e. if the published ver_max$_i$ is a predefined value), set $t_{cli}[i]$ = 20: If 20 data packets have been missed by client i (i.e. if no supported data packet is received by client i for 20 transmit-windows), then transmit a supported fallback data packet (i.e. with a compatible protocol "ver") to the client i. This leads to an effective disregard of client i.

- If the horizontal distance as given by the norm function D[i] is larger than, e.g. 3 km, multiply $t_{cli}[i]$ by 2: If the client i is "far away" horizontally, then increase the number of allowed missed data packets before transmitting a supported fallback data packet (i.e. with a compatible protocol "ver") to the client i by a factor of 2.

- If the vertical separation as given by the norm function D[i] is larger than, e.g. 500 m, multiply $t_{cli}[i]$ by 2: If the client i is "far away" vertically, then increase the number of allowed missed data packets before transmitting a supported fallback data packet (i.e. with a compatible protocol "ver") to the client i by a factor of 2.

- If the approach time (distance divided by the relative speed vector projected on the relative position vector) of the client i is less than 30 seconds, set $t_{cli}[i]$ to 1: If the client i is on a collision course with the host with an expected approach in less than 30 sec, then transmit a supported fallback data packet (i.e. with a compatible protocol "ver") to the client i.

- If a client i's ver_max$_i$ is far behind the latest AMP protocol (e.g. if a firmware update for the client i is available for more than 2 years), multiple $t_{cli}[i]$ by 2: If the client i's firmware is "old", then increase the number of allowed missed data packets before transmitting a supported fallback data packet (i.e. with a compatible protocol "ver") to the client i by a factor of 2.

A placeholder client for protocol version 0 (most compatible protocol version) and a client update interval of 10 may be added to retain a base, worst-case compatibility.

3. AMP protocol

3.1. Marshalling and Semantics

A data packet comprises a header section and a payload data section. The size of the header section is 8 bytes, of the payload section is 16 bytes. The header is transmitted in clear (non-encrypted), the payload is encrypted. The data packet can be constructed as follows:

3.1. 1. Header

The header section of the data packet comprises:

| Field id | Description |
|---|---|
| | Indicative of the identifier of the sender, can be either a current identifier $ID_k$ for EPRID (see above) or fixed. |
| ron | Indicative of a subsequent randomly obtained number $RON_k$ for generating $ID_{k+1}$ |
| urgency | Message urgency, can be between NORMAL and MAYDAY. Can have an effect on, e.g. hop_max. |
| hop_max | Maximum number of retransmissions for creating a mesh-network for message relaying between a plurality of broadcast devices. |
| hop_count | Current count of retransmissions, incremented with each message relay. |
| ver | AMP protocol version used by sender in this data packet. Can be evaluated by the receiver to determine which fields to process. |
| ver_max | Maximum AMP protocol version supported by the sender for receive or transmit. |

3.1.2. Payload

| Field | Unit/Scaling | Description |
|---|---|---|
| lat_comp | | Latitude, compressed with ACC, see above. |
| lon_comp | | Longitude, compressed with ACC, see above. |
| alt | m | Altitude. |
| acft_type | enum | Aircraft type: Undefined, Glider, Towplane, Helicopter, Parachute, Dropplane, Hangglider, Paraglider, Single-engine piston, Jet, Multi-engine, Balloon, Airship, Blimp, UAV, Static. |
| track | 1° | Ground track. |
| speed | .1 m/s | Ground speed, unsigned ERC, see above. |
| climb | .1 m/s | Climb rate, signed ERC, see above. |
| turnrate | .1 °/s | Turn rate, signed ERC. |
| mov_mode | enum | Discrete movement mode: On ground, Flying, Circling. |
| stealth | flag | Indicating intent of sender to reduce visibility |
| notrack | flag | Indicating intent of sender not to track his signal, e.g. with ground station receivers. |
| timestamp | .25 s | Unix epoch timestamp, in quarter seconds, UTC from GNSS. |

3.2. Encryption and Decryption

The payload is encrypted to ensure message integrity, system safety and provide protection for the relevant content against eavesdropping.

The AES algorithm with a key size of 128 bits is used. The key is fixed and shared by all participants of the system. Only the payload block (see Section 3.1.2) is encrypted, the header is transmitted in clear.

Prior to encryption, a 128-bit cryptographic nonce is mixed with the payload. The nonce is created deterministically from the header of the data packet, a time stamp of the data packet, and a secret constant. Because the cryptographic nonce contains the time stamp, replay attacks are not feasible.

The broadcasted, encrypted payload is generated as

$$payload_E = AES(nonce \wedge payload, key)$$

where "^" denotes the bitwise-XOR operator.

Note:

Any embodiments described with respect to the device shall similarly pertain to the method, the computer program product, the use, and the system. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

**Claims**

1.  A broadcast device (10) for wirelessly broadcasting information pertaining to a first aircraft (1), the broadcast device (10) comprising:

    - a positioning device (11) configured to determine position data (PD1) indicative of a position (P1) of the broadcast device (10), wherein the position data (PD1) comprises latitude data (PD1_LAT) indicative of a latitude of the broadcast device (10) and longitude data (PD1_LON) indicative of a longitude of the broadcast device (10),
    - a control unit (12) configured to:

        * receive the position data (PD1) as determined by the positioning device (11),
        * determine compressed position data (PD1') by performing a scaling operation for rescaling, a rounding operation for rounding, and a gridding operation for projecting the scaled and rounded position data (PD1) onto a grid such that the compressed position data (PD1') retains position only relative to an origin of a respective grid cell on the latitude data (PD1_LAT) and the longitude data (PD1_LON), wherein a compressed bit width (S1') of the compressed position data (PD1') is smaller than a bit width (S1) of the position data (PD1), and
        * generate a data packet (D1) comprising the compressed position data (PD1') and an identifier (ID1) of the broadcast device (10),

    wherein the broadcast device (10) further comprises
    - a radio transmitter (13) configured to receive the generated data packet (D1) and wirelessly broadcast the received data packet (D1), and

        wherein the broadcasted data packet (D1) is indicative of the to-be-broadcasted information, and
        wherein the broadcast device (10) is further configured to, for determining the compressed position data (PD1'),

    - perform the scaling operation on the latitude data (PD1_ LAT) using a latitude resolution divider (D_LAT) and perform the gridding operation on the latitude data (PD1_LAT) using a latitude modulus (m_LAT) on the outcome of said scaling operation such that the latitude data (PD1_LAT) is compressed to obtain the compressed latitude data (PD1'_LAT), wherein

$$PD1'\_LAT = \frac{\left(PD1\_LAT + \frac{D\_LAT}{2}\right)}{D\_LAT} \bmod m\_LAT$$

    where D_LAT is the latitude resolution divider, m_LAT is the latitude modulus, and mod is the modulo operator, and
    - perform the scaling operation on the longitude data (PD1_LON) using a longitude resolution divider (D_LON) and perform the gridding operation on the longitude data (PD1_LON) using a longitude modulus (m_LON) on the outcome of said scaling operation such that the longitude data (PD1_LON) is compressed to obtain the compressed longitude data (PD1'_LON), wherein

$$PD1'\_LON = \frac{\left(PD1\_LON + \frac{D\_LON}{2}\right)}{D\_LON} \bmod m\_LON$$

where D_LON is the longitude resolution divider, m_LON is the longitude modulus, and mod is the modulo operator.

2. The broadcast device (10) of claim 1 configured to determine the position (P1) such that the position data (PD1) further comprises altitude data (PD1_ALT) indicative of an altitude of the broadcast device (10),
and in particular wherein the broadcast device (10) is configured to determine the compressed position data (PD1') such that the compressed position data (PD1') comprises the altitude data (PD1_ALT).

3. The broadcast device (10) of any of the preceding claims configured to

- determine the latitude modulus (m_LAT) using a compressed latitude bit width (S1'_LAT) of compressed latitude position data (PD1'_LAT), and in particular wherein the latitude modulus is m_LAT = $2^{S1'\_LAT}$, and/or
- determine the longitude modulus (m_LON) using a compressed longitude bit width (S1'_LON) of compressed longitude position data (PD1'_LON), and in particular wherein the longitude modulus is m_LON = $2^{S1'\_LON}$.

4. The broadcast device (10) of any of the preceding claims configured to, for determining the compressed position data (PD1'),

- determine the latitude resolution divider D_LAT using a minimum required grid size (G_min) for the gridding operation and the compressed latitude bit width (S1'_LAT) of the compressed latitude data (PD1'_LAT),

and in particular wherein

$$D\_LAT = \operatorname{ceil}\left(\frac{G\_min}{m\_LAT\ res\_raw}\right)$$

where G_min is the minimum required grid size for the gridding operation, m_LAT=$2^{S1\_LAT}$ is the latitude modulus, res_raw is a resolution of the latitude data (PD1_LAT), and ceil() is the ceiling function.

5. The broadcast device (10) of claim 4 configured to, for determining the compressed position data (PD1'),

- determine the longitude resolution divider D_LON as a function of the latitude data (PD1_LAT),

and in particular wherein

$$D\_LON = \operatorname{ceil}\left(\frac{G\_min/\cos(PD1\_LAT)}{m\_LAT\ res\_raw}\right)$$

where PD1_LAT is the latitude data and cos() is the cosine function.

6. The broadcast device (10) of claim 5 configured to, for determining the compressed position data (PD1'),

- approximate the longitude resolution divider D_LON as

$$D\_LON = a\_0 + \sum_{n=1}^{N} a\_n\ \text{thr}(|PD1\_LAT| - LAT\_n)$$

where a_0 is a constant, a_1... a_N are approximation coefficients, LAT_1 ... LAT_N are latitude thresholds, |...| returns the absolute value of its argument, and thr() is the threshold function defined as

$$\text{thr}(x) = \begin{cases} x & \text{if } x > 0 \\ 0 & \text{else} \end{cases}$$

and in particular where N=7 with a_0=52, a_1=$2^{-1}$, a_2=$2^0$, a_3=$2^1$, a__4=$2^2$, a_5=$2^3$, a_6=$2^4$, a_7=$2^5$, LAT_1=12, LAT_2=39, LAT_3=56, LAT _4=57, LAT_5=73, LAT_6=79, and LAT_7=82.

7. The broadcast device (10) of any of the preceding claims configured to perform the gridding operation in such a way that the grid size (G) of the gridding operation is larger than a radio range of the broadcast device (10), in particular by a factor of 2 or more.

8. The broadcast device (10) of any of the preceding claims configured to generate the data packet (D1) in such a way that the data packet (D1) comprises a header section and a payload section, and in particular wherein the header section is non-encrypted and/or wherein the payload section is encrypted.

9. The broadcast device (10) of claim 8 configured to encrypt the payload section of the data packet (D1) by means of a symmetric cryptographic algorithm,
and in particular wherein the broadcast device (10) is configured to use a cryptographic nonce based on the header section of the data packet (D1), based on a time stamp, and based on a secret constant for encryption.

10. The broadcast device (10) of any of the preceding claims configured to generate the data packet (D1) in such a way that the data packet (D1) comprises at least one of

- a timestamp, in particular in the payload section of the data packet,
- a packet protocol version, in particular in the header section of the data packet, and
- a maximum supported packet protocol version, in particular in the header section of the data packet.

11. The broadcast device (10) of any of the preceding claims configured to

- repeatedly determine updated position data (PD1) indicative of an updated position (P1) of the broadcast device (10),
- repeatedly determine updated compressed position data (PD1') using at least a part of the updated position data (PD1), and
- repeatedly generate and broadcast an updated data packet (D1) comprising the updated compressed position data (PD1') and the identifier (ID1) of the broadcast device (10),

and in particular wherein any time interval between two of such consecutive updates is between 0.1 s and 5 s, in particular is between 0.5 s and 1 s, and in particular is 1 s.

12. The broadcast device (10) of any of the preceding claims configured to generate the data packet (D1) in such a way that the data packet (D1) comprises a pair c1 = (e1, m1) with an exponent e1 being a natural number and with a mantissa m1 being a natural number,

wherein the pair c1 is indicative of a value v1,
wherein the mantissa m has a bit width of $N_{m1}$ and wherein the exponent e has a bit width of $N_{e1}$,
wherein

$$v1 = 2^{e1} * (2^{Nm1} + m1) - 2^{Nm1}$$

and wherein the bit widths $N_{m1}$ and $N_{e1}$ are selected such that a total bit width $N1=N_{e1}+N_{m1}$ of the pair c1 is smaller than a total bit width of the value v1.

13. The broadcast device (10) of claim 12 configured to generate the data packet (D1) in such a way that the pair c1 is indicative of velocity data (VD1) of the first aircraft (1),
in particular wherein the value v1 is indicative of a velocity vector magnitude of the first aircraft (1).

14. The broadcast device (10) of any of the preceding claims further comprising a radio receiver (14) configured to receive a foreign data packet (D2) as broadcasted from a foreign broadcast device (20) of any of the preceding claims, the foreign data packet (D2) being indicative of information pertaining to a second aircraft (2),

wherein the foreign data packet (D2) comprises foreign compressed position data (PD2'), wherein a bit width (S2') of the foreign compressed position data (PD2') is smaller than a bit width (S2) of foreign position data (PD2) being indicative of a position (P2) of the foreign broadcast device (20), and
wherein the broadcast device (10) is configured to
- uncompress and disambiguate the foreign compressed position data (PD2') using the position data (PD1) to reconstruct the foreign position data (PD2).

15. The broadcast device (10) of claim 14 configured to, for uncompressing the foreign compressed position data (PD2') using the position data (PD1) to reconstruct the foreign position data (PD2):

- uncompress foreign latitude data (PD2_LAT) from the received compressed foreign latitude data (PD2'_LAT) using the latitude data (PD1_LAT),
- determine the longitude resolution divider (D_LON) using the foreign latitude data (PD2_LAT), and
- uncompress foreign longitude data (PD2_LON) from the received compressed foreign longitude data (PD2'_LON) using the determined longitude resolution divider (D_LON) and the longitude data (PD1_LON).

16. The broadcast device (10) of claim 15 configured to, for determining the longitude resolution divider (D_LON) using the foreign latitude data (PD2_LAT),
approximate the longitude resolution divider D_LON as

$$D\_LON = a\_0 + \sum_{n=1}^{N} a\_n \, \mathrm{thr}(|PD2\_LAT| - LAT\_n)$$

where a_0 is a constant, a_1... a_N are approximation coefficients, LAT_1 ... LAT_N are latitude thresholds, |...| returns the absolute value of its argument, and thr() is the threshold function defined as

$$\mathrm{thr}(x) = \begin{cases} x & \text{if } x > 0 \\ 0 & \text{else} \end{cases}$$

and in particular where N=7 with a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, and LAT_7=82.

17. The broadcast device (10) of any of the claims 14 to 16 configured to calculate a collision probability and/or visualize information indicative of a situational awareness between the first aircraft (1) and the second aircraft (2) based on the information pertaining to the first aircraft (1) and based on the received information pertaining to the second aircraft (2).

18. A receiver device (100) comprising:

- a radio receiver (14) configured to receive a foreign data packet (D2), the foreign data packet (D2) being indicative of information pertaining to a second aircraft (2),

wherein the foreign data packet (D2) comprises foreign compressed position data (PD2'), wherein the foreign compressed position data (PD2') comprises compressed foreign latitude data (PD2'_LAT) and compressed foreign longitude data (PD2'_LON), wherein a bit width (S2') of the foreign compressed position data (PD2') is smaller than a bit width (S2) of foreign position data (PD2) being indicative of a position (P2) of the foreign broadcast device (20),
wherein the receiver device (100) further comprises

- a control unit (12) configured to:

* receive position data (PD1) indicative of a position (P1) of the receiver device (100), wherein the position data (PD1) comprises latitude data (PD1_LAT) indicative of a latitude of the receiver device (100) and longitude data (PD1_LON) indicative of a longitude of the receiver device (100),
* receive the foreign data packet (D2) as received by the radio receiver (14), and

* uncompress and disambiguate the foreign compressed position data (PD2') using the position data (PD1) to reconstruct the foreign position data (PD2),

wherein the receiver device (100) is configured to, for uncompressing the foreign compressed position data (PD2') using the position data (PD1) to reconstruct the foreign position data (PD2):

- uncompress foreign latitude data (PD2_LAT) from the received compressed foreign latitude data (PD2'_LAT) using the latitude data (PD1_LAT),
- determine a longitude resolution divider (D_LON) using the foreign latitude data (PD2_LAT), and
- uncompress foreign longitude data (PD2_LON) from the received compressed foreign longitude data (PD2'_LON) using the determined longitude resolution divider (D_LON) and the longitude data (PD1_LON).

19. The receiver device (100) of claim 18 configured to, for determining the longitude resolution divider (D_LON) using the foreign latitude data (PD2_LAT), approximate the longitude resolution divider D_LON as

$$D\_LON = a\_0 + \sum_{n=1}^{N} a\_n \, \mathrm{thr}(|PD2\_LAT| - LAT\_n)$$

where a_0 is a constant, a_1... a_N are approximation coefficients, LAT_1 ... LAT_N are latitude thresholds, |...| returns the absolute value of its argument, and thr() is the threshold function defined as

$$\mathrm{thr(x)} = \begin{cases} x & \text{if } x > 0 \\ 0 & \text{else} \end{cases}$$

and in particular where N=7 with a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT _2=39, LAT_3=56, LAT _4=57, LAT_5=73, LAT_6=79, and LAT_7=82.

20. A method for, by means of a broadcast device (10), in particular of any of the claims 1 to 17, wirelessly broadcasting information pertaining to a first aircraft (1), the method comprising steps of:

- providing the broadcast device (10) comprising a positioning device (11), a control unit (12), and a radio transmitter (13),
- by means of the positioning device (11) determining position data (PD1) indicative of a position (P1) of the broadcast device (10), wherein the position data (PD1) comprises latitude data (PD1_LAT) indicative of a latitude of the broadcast device (10) and longitude data (PD1_LON) indicative of a longitude of the broadcast device (10),
- by means of the control unit (12):

* receiving the position data (PD1) as determined by the positioning device (11),
* determining compressed position data (PD1') by performing a scaling operation for rescaling, a rounding operation for rounding, and a gridding operation for projecting the scaled and rounded position data (PD1) onto a grid such that the compressed position data (PD1') retains position only relative to an origin of a respective grid cell on at least one of the latitude data (PD1_LAT) and the longitude data (PD1_LON), wherein a compressed bit width (S1') of the compressed position data (PD1') is smaller than a bit width (S1) of the position data (PD1), and
* generating a data packet (D1) comprising the compressed position data (PD1') and an identifier (ID1) of the broadcast device (10), and

wherein the method comprises further steps of:

- by means of the radio transmitter (13) receiving the generated data packet (D1) and wirelessly broadcasting the received data packet (D1),

wherein the broadcasted data packet (D1) is indicative of the to-be-broadcasted information, and wherein the method comprises further steps of

- performing the scaling operation on the latitude data (PD1_LAT) using a latitude resolution divider (D_LAT) and performing the gridding operation on the latitude data (PD1_LAT) using a latitude modulus (m_LAT) on the outcome of said scaling operation such that the latitude data (PD1_LAT) is compressed to obtain the compressed latitude data (PD1'_LAT), wherein

$$PD1'\_LAT = \frac{\left(PD1\_LAT + \frac{D\_LAT}{2}\right)}{D\_LAT} \bmod m\_LAT$$

where D_LAT is the latitude resolution divider, m_LAT is the latitude modulus, and mod is the modulo operator, and
- performing the scaling operation on the longitude data (PD1_LON) using a longitude resolution divider (D_LON) and performing the gridding operation on the longitude data (PD1 LON) using a longitude modulus (m_LON) on the outcome of said scaling operation such that the longitude data (PD1_LON) is compressed to obtain the compressed longitude data (PD1'_LON), wherein

$$PD1'\_LON = \frac{\left(PD1\_LON + \frac{D\_LON}{2}\right)}{D\_LON} \bmod m\_LON$$

where D_LON is the longitude resolution divider, m_LON is the longitude modulus, and mod is the modulo operator.

21. The method of claim 20 wherein the broadcast device (10) further comprises a radio receiver (14) and wherein the method comprises a further step of

- by means of the radio receiver (14) receiving a foreign data packet (D2) as broadcasted from a foreign broadcast device (20) of any of the claims 1 to 17, the foreign data packet (D2) being indicative of information pertaining to a second aircraft (2),

  wherein the foreign data packet (D2) comprises foreign compressed position data (PD2'), wherein a bit width (S2') of the foreign compressed position data (PD2') is smaller than a bit width (S2) of foreign position data (PD2) being indicative of a position (P2) of the foreign broadcast device (20),
  and wherein the method comprises further steps of

- uncompressing and disambiguating the foreign compressed position data (PD2') using the position data (PD1) to reconstruct the foreign position data (PD2).

22. The method of claim 21 wherein the step of uncompressing the foreign compressed position data (PD2') using the position data (PD1) to reconstruct the foreign position data (PD2) comprises

- uncompressing foreign latitude data (PD2_LAT) from the received compressed foreign latitude data (PD2'_LAT) using the latitude data (PD1_LAT),
- determining the longitude resolution divider (D_LON) using the foreign latitude data (PD2_LAT), and
- uncompressing foreign longitude data (PD2_LON) from the received compressed foreign longitude data (PD2'_LON) using the determined longitude resolution divider (D_LON) and the longitude data (PD1_LON).

23. A method for, by means of a receiver device (100), in particular of any of the claims 18 to 19, wirelessly receiving information pertaining to a second aircraft (2), the method comprising steps of:

- providing the receiver device (100) comprising a control unit (12) and a radio receiver (14),
- by means of the radio receiver (14) receiving a foreign data packet (D2) as broadcasted from a foreign broadcast device (20) of any of the claims 1 to 17, the foreign data packet (D2) being indicative of the information pertaining to the second aircraft (2),
  wherein the foreign data packet (D2) comprises foreign compressed position data (PD2'), wherein the foreign compressed position data (PD2') comprises compressed foreign latitude data (PD2'_LAT) and compressed foreign longitude data (PD2'_LON), wherein a bit width (S2') of the foreign compressed position data (PD2') is smaller than a bit width (S2) of foreign position data (PD2) being indicative of a position (P2) of the foreign broadcast device (20), and
- by means of the control unit (12):

* receiving position data (PD1) indicative of a position (P1) of the receiver device (100), wherein the position data (PD1) comprises latitude data (PD1_LAT) indicative of a latitude of the receiver device (100) and longitude data (PD1_LON) indicative of a longitude of the receiver device (100),
* receiving the foreign data packet (D2) as received by the radio receiver (14), and
* uncompressing and disambiguating the foreign compressed position data (PD2') using the position data (PD1) to reconstruct the foreign position data (PD2),

wherein the step of uncompressing the foreign compressed position data (PD2') using the position data (PD1) to reconstruct the foreign position data (PD2) comprises
- uncompressing foreign latitude data (PD2_LAT) from the received compressed foreign latitude data (PD2'_LAT) using the latitude data (PD1_LAT),
- determining a longitude resolution divider (D_LON) using the foreign latitude data (PD2_LAT), and
- uncompressing foreign longitude data (PD2_LON) from the received compressed foreign longitude data (PD2'_LON) using the determined longitude resolution divider (D_LON) and the longitude data (PD1_LON).

24. A computer program product

comprising instructions to cause a broadcast device of any of the claims 1 to 17 to execute the steps of a method of any of the claims 20 to 22 or
comprising instructions to cause a receiver device of any of the claims 18 to 19 to execute the steps of a method of claim 23.

25. A computer-readable medium having stored thereon the computer program product of claim 24.

26. A system for aircraft traffic awareness and/or aircraft collision avoidance comprising

- a first broadcast device (10) of any of the claims 1 to 17 at a first aircraft (1) for wirelessly broadcasting information pertaining to the first aircraft (1), and at least one of
- a second broadcast device (20) of any of the claims 1 to 17 at a second aircraft (2) for wirelessly broadcasting information pertaining to the second aircraft (2) and
- a receiver device (20) of any of the claims 18 to 19 for receiving the information pertaining to the first aircraft (1) as broadcasted by the first broadcast device (10).

**Patentansprüche**

1. Eine Sendevorrichtung (10) zum drahtlosen Senden von Informationen, die sich auf ein erstes Flugzeug (1) beziehen, wobei die Sendevorrichtung (10) umfasst

- eine Positionierungsvorrichtung (11), die konfiguriert ist, um Positionsdaten (PD1) zu bestimmen, die eine Position (P1) der Sendevorrichtung (10) angeben, wobei die Positionsdaten (PD1) Breitengraddaten (PD1_LAT), die einen Breitengrad der Sendevorrichtung (10) angeben, und Längengraddaten (PD1 _LON), die einen Längengrad der Sendevorrichtung (10) angeben, umfassen
- eine Steuereinheit (12), die konfiguriert ist, um:

* die Positionsdaten (PD1) zu empfangen, wie sie von der Positionierungsvorrichtung (11) bestimmt wurden,
* komprimierte Positionsdaten (PD1') zu bestimmen, durch Ausführen einer Skalierungsoperation zum Neuskalieren, einer Rundungsoperation zum Runden und einer Rasterungsoperation zum Projizieren der skalierten und gerundeten Positionsdaten (PD1) auf ein Rasterung, so dass die komprimierten Positionsdaten (PD1') die Position nur relativ zu einem Ursprung einer jeweiligen Rasterzelle auf den Breitengraddaten (PD1_LAT) und den Längengraddaten (PD1_LON) beibehalten, wobei eine komprimierte Bitbreite (S1') der komprimierten Positionsdaten (PD1') kleiner ist als eine Bitbreite (S1) der Positionsdaten (PD1), und

* ein Datenpaket (D1) zu erzeugen, das die komprimierten Positionsdaten (PD1') und eine Kennung (ID1) der Sendevorrichtung (10) umfasst,

wobei die Sendevorrichtung (10) weiter umfasst

- einen Funksender (13), der so konfiguriert ist, dass er das erzeugte Datenpaket (D1) empfängt und das empfangene Datenpaket (D1) drahtlos sendet, und wobei das gesendete Datenpaket (D1) die zu sendende Information angibt, und

wobei die Sendevorrichtung (10) weiter so konfiguriert ist, dass sie zur Bestimmung der komprimierten Positionsdaten (PD1')

- die Skalierungsoperation an den Breitengraddaten (PD1_LAT) unter Verwendung eines Breitengradauflösungsteilers (D_LAT) durchführt und die Rasterungsoperation an den Breitengraddaten (PD1_LAT) unter Verwendung eines Breitengradmoduls (m_LAT) am Ergebnis der Skalierungsoperation durchführt, so dass die Breitengraddaten (PD1_LAT) komprimiert werden, um die komprimierten Breitengraddaten (PD1'_LAT) zu erhalten, wobei

$$PD1'\_LAT = \frac{\left(PD1\_LAT + \frac{D\_LAT}{2}\right)}{D\_LAT} \bmod m\_LAT$$

wobei D_LAT der Breitengradauflösungsteiler ist, m_LAT der Breitengradmodul ist und mod der Modulo-Operator ist, und

- die Skalierungsoperation an den Längengraddaten (PD1_LON) unter Verwendung eines Längengradauflösungsteilers (D_LON) durchführt und die Rasterungsoperation an den Längendaten (PD1_LON) unter Verwendung eines Längengradmoduls (m_LON) am Ergebnis der Skalierungsoperation durchführt, so dass die Längengraddaten (PD1_LON) komprimiert werden, um die komprimierten Längendaten (PD1'_LON) zu erhalten, wobei

$$PD1'\_LON = \frac{\left(PD1\_LON + \frac{D\_LON}{2}\right)}{D\_LON} \bmod m\_LON$$

wobei D_LON der Längengradauflösungsteiler ist, m_LON der Längengradmodul ist und mod der Modulo-Operator ist.

2. Die Sendevorrichtung (10) nach Anspruch 1, die so konfiguriert ist, dass sie die Position (P1) so bestimmt, dass die Positionsdaten (PD1) weiter Höhendaten (PD1_ALT) umfassen, die eine Höhe der Sendevorrichtung (10) angeben, und insbesondere wobei die Sendevorrichtung (10) konfiguriert ist, die komprimierten Positionsdaten (PD1') so zu bestimmen, dass die komprimierten Positionsdaten (PD1') die Höhendaten (PD1_ALT) umfassen.

3. Die Sendevorrichtung (10) nach einem der vorangehenden Ansprüche, die konfiguriert ist, um

- den Breitengradmodul (m_LAT) unter Verwendung einer komprimierten Breitengradbitbreite (S1'_LAT) der komprimierten Breitengrad-Positionsdaten (PD1'_LAT) zu bestimmen und insbesondere wobei der Breitengradmodul m_LAT = $2^{S1'\_LAT}$ ist, und/oder
- den Längengradmodul (m_LON) unter Verwendung einer komprimierten Längengradbitbreite (S1'_LON) von komprimierten Längengrad-Positionsdaten (PD1'_LON) zu bestimmen und insbesondere wobei der Längengradmodul m_LON = $2^{S1'\_LON}$ ist.

4. Die Sendevorrichtung (10) nach einem der vorangehenden Ansprüche, die so konfiguriert ist, dass sie zur Bestimmung der komprimierten Positionsdaten (PD1')

- den Breitengradauflösungsteiler D_LAT unter Verwendung einer minimal erforderlichen Rastergrösse (G_min) für die Rasterung und der komprimierten Breitenbitbreite (S1'_LAT) der komprimierten Positionsdaten (PD1'_LAT) bestimmt,

und insbesondere wobei

$$D\_LAT = \mathrm{ceil}\left(\frac{G\_min}{m\_LAT\ res\_raw}\right)$$

wobei G_min die minimal erforderliche Rastergrösse für die Rasterung ist, $m\_LAT = 2^{S1'\_LAT}$ der Breitengradmodul ist, res_raw eine Auflösung der Breitengraddaten (PD1_LAT) ist und ceil() die Ceiling-Funktion ist.

5. Die Sendevorrichtung (10) nach Anspruch 4, die so konfiguriert ist, dass sie zur Bestimmung der komprimierten Positionsdaten (PD1')

   - den Längengradauflösungsteiler D_LON in Abhängigkeit von den Längengraddaten (PD1_LAT) bestimmt,

   und insbesondere wobei

$$D\_LON = \mathrm{ceil}\left(\frac{G\_min/\cos(PD1\_LAT)}{m\_LAT\ res\_raw}\right)$$

wobei PD1_LAT die Breitengraddaten sind und cos() die Kosinusfunktion ist.

6. Die Sendevorrichtung (10) nach Anspruch 5, die so konfiguriert ist, um zur Bestimmung der komprimierten Positionsdaten (PD1')

   - den Längengradauflösungsteiler D_LON wie folgt zu approximieren

$$D\_LON = a\_0 + \sum_{n=1}^{N} a\_n\ \mathrm{thr}(|PD1\_LAT| - LAT\_n)$$

wobei a_0 eine Konstante ist, a_1...a_N Approximationskoeffizienten sind, LAT_1 ... LAT_N Breitengradschwellenwerte sind, |...| den Absolutwert seines Arguments zurückgibt und thr() die Schwellenwertfunktion ist, die definiert ist als

$$\mathrm{thr}(x) = \begin{cases} x & \text{if } x > 0 \\ 0 & \text{else} \end{cases}$$

und insbesondere wobei N=7 ist, mit a_0=52, $a\_1=2^{-1}$, $a\_2=2^0$, $a\_3=2^1$, $a\_4=2^2$, $a\_5=2^3$, $a\_6=2^4$, $a\_7=2^5$, LAT_1=12, LAT_2=39, LAT_3=56, LAT _4=57, LAT_5=73, LAT_6=79, und LAT_7=82.

7. Die Sendevorrichtung (10) nach einem der vorangehenden Ansprüche, die so konfiguriert ist, dass sie die Rasterungsoperation so durchführt, dass die Rastergrösse (G) der Rasterungsoperation grösser ist als eine Sendereichweite der Sendevorrichtung (10), insbesondere um einen Faktor 2 oder mehr.

8. Die Sendevorrichtung (10) nach einem der vorangehenden Ansprüche, die so konfiguriert ist, dass sie das Datenpaket (D1) derart erzeugt, dass das Datenpaket (D1) einen Header-Abschnitt und einen Payload-Abschnitt umfasst, und insbesondere wobei der Header-Abschnitt nicht verschlüsselt ist und/oder wobei der Payload-Abschnitt verschlüsselt ist.

9. Die Sendevorrichtung (10) nach Anspruch 8, die so konfiguriert ist, dass sie den Payload-Abschnitt des Datenpakets (D1) mittels eines symmetrischen kryptographischen Algorithmus verschlüsselt, und insbesondere wobei die Sendevorrichtung (10) so konfiguriert ist, dass sie eine kryptographische Nonce auf der Grundlage des Header-Abschnitts des Datenpakets (D1), auf der Grundlage eines Zeitstempels und auf der Grundlage einer geheimen Konstante zur Verschlüsselung verwendet.

10. Die Sendevorrichtung (10) nach einem der vorangehenden Ansprüche, die so konfiguriert ist, dass sie das Datenpaket (D1) so erzeugt, dass das Datenpaket (D1) mindestens eines der folgenden Elemente umfasst

- einen Zeitstempel, insbesondere im Payload-Abschnitt des Datenpakets,
- eine Paketprotokollversion, insbesondere im Header-Abschnitt des Datenpakets, und
- eine maximal unterstützte Paketprotokollversion, insbesondere im Header-Abschnitt des Datenpakets.

**11.** Die Sendevorrichtung (10) nach einem der vorangehenden Ansprüche, die konfiguriert ist, um

- wiederholt aktualisierte Positionsdaten (PD1) zu bestimmen, die eine aktualisierte Position (P1) der Sendevorrichtung (10) anzeigen,
- wiederholt aktualisierte komprimierte Positionsdaten (PD1') unter Verwendung mindestens eines Teils der aktualisierten Positionsdaten (PD1) zu bestimmen und
- wiederholt ein aktualisiertes Datenpaket (D1), das die aktualisierten komprimierten Positionsdaten (PD1') und die Kennung (ID1) des Sendegeräts (10) enthält, zu erzeugen und zu senden

und insbesondere wobei jedes Zeitintervall zwischen zwei solchen aufeinanderfolgenden Aktualisierungen zwischen 0,1 s und 5 s, insbesondere zwischen 0,5 s und 1 s und insbesondere 1 s beträgt.

**12.** Die Sendevorrichtung (10) nach einem der vorangehenden Ansprüche, die so konfiguriert ist, dass sie das Datenpaket (D1) so erzeugt, dass das Datenpaket (D1) ein Paar c1 = (e1, m1) umfasst, wobei ein Exponent e1 eine natürliche Zahl ist und eine Mantisse m1 eine natürliche Zahl ist,

wobei das Paar c1 auf einen Wert v1 hinweist,
wobei die Mantisse m eine Bitbreite von $N_{m1}$ hat und wobei der Exponent e eine Bitbreite von $N_{e1}$ hat,
wobei

$$v1 = 2^{e1} * (2^{Nm1} + m1) - 2^{Nm1}$$

und wobei die Bitbreiten $N_{m1}$ und $N_{e1}$ so gewählt sind, dass eine Gesamtbitbreite $N_1 = N_{e1} + N_{m1}$ des Paares c1 kleiner ist als eine Gesamtbitbreite des Wertes v1.

**13.** Die Sendevorrichtung (10) nach Anspruch 12, die so konfiguriert ist, dass sie das Datenpaket (D1) so erzeugt, dass das Paar c1 Geschwindigkeitsdaten (VD1) des ersten Flugzeugs (1) anzeigt,
insbesondere wobei der Wert v1 eine Geschwindigkeitsvektorgrösse des ersten Flugzeugs (1) angibt.

**14.** Die Sendevorrichtung (10) nach einem der vorangehenden Ansprüche, weiter umfassend einen Funkempfänger (14), der so konfiguriert ist, dass er ein fremdes Datenpaket (D2) empfängt, das von einer fremden Sendevorrichtung (20) nach einem der vorangehenden Ansprüche gesendet wird, wobei das fremde Datenpaket (D2) Informationen anzeigt, die ein zweites Flugzeug (2) betreffen,

wobei das fremde Datenpaket (D2) fremde komprimierte Positionsdaten (PD2') umfasst, wobei eine Bitbreite (S2') der fremden komprimierten Positionsdaten (PD2') kleiner ist als eine Bitbreite (S2) von fremden Positionsdaten (PD2), die eine Position (P2) der fremden Sendevorrichtung (20) anzeigen, und
wobei die Sendevorrichtung (10) konfiguriert ist, um
- die fremden komprimierten Positionsdaten (PD2') unter Verwendung der Positionsdaten (PD1) zu dekomprimieren und eindeutig zu machen, um die fremden Positionsdaten (PD2) zu rekonstruieren.

**15.** Die Sendevorrichtung (10) nach Anspruch 14, die so konfiguriert ist, dass sie zum Dekomprimieren der fremden komprimierten Positionsdaten (PD2') unter Verwendung der Positionsdaten (PD1) die fremden Positionsdaten (PD2) rekonstruiert:

- Dekomprimieren von fremden Breitengraddaten (PD2_LAT) aus den empfangenen komprimierten fremden Breitengraddaten (PD2'_LAT) unter Verwendung der Breitengraddaten (PD1_LAT),
- Bestimmen des Längengradauflösungsteilers (D_LON) unter Verwendung der Daten für den fremden Breitengrad (PD2_LAT), und
- Dekomprimieren der fremden Längengraddaten (PD2_LON) aus den empfangenen komprimierten fremden Längengraddaten (PD2'_LON) unter Verwendung des ermittelten Längengradauflösungsteilers (D_LON) und der Längengraddaten (PD1_LON).

16. Die Sendevorrichtung (10) nach Anspruch 15, die so konfiguriert ist, dass sie zur Bestimmung des Längengradauflösungsteilers (D_LON) unter Verwendung der fremden Breitengraddaten (PD2_LAT) den Längengradauflösungsteiler D_LON approximiert als

$$D\_LON = a\_0 + \sum_{n=1}^{N} a\_n\, thr(|PD2\_LAT| - LAT\_n)$$

wobei a_0 eine Konstante ist, a_1...a_N Approximationskoeffizienten sind, LAT_1...LAT_N Breitengrad-Schwellenwerte sind, |...| den Absolutwert seines Arguments zurückgibt und thr() die Schwellenwertfunktion ist, die definiert ist als

$$thr(x) = \begin{cases} x & \text{if } x > 0 \\ 0 & \text{else} \end{cases}$$

und insbesondere wobei N=7 ist, mit a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, und LAT_7=82.

17. Die Sendevorrichtung (10) nach einem der Ansprüche 14 bis 16, die so konfiguriert ist, dass sie eine Kollisionswahrscheinlichkeit berechnet und/oder Informationen visualisiert, die eine Situationswahrnehmung zwischen dem ersten Flugzeug (1) und dem zweiten Flugzeug (2) anzeigen, und zwar auf der Grundlage der Informationen, die das erste Flugzeug (1) betreffen, und auf der Grundlage der empfangenen Informationen, die das zweite Flugzeug (2) betreffen.

18. Eine Empfangsvorrichtung (100), umfassend:

- einen Funkempfänger (14), der so konfiguriert ist, dass er ein fremdes Datenpaket (D2) empfängt, wobei das fremde Datenpaket (D2) auf Informationen hinweist, die ein zweites Flugzeug (2) betreffen,

wobei das fremde Datenpaket (D2) komprimierte fremde Positionsdaten (PD2') umfasst, wobei die komprimierten fremden Positionsdaten (PD2') komprimierte fremde Breitengraddaten (PD2'_LAT) und komprimierte fremde Längengraddaten (PD2'_LON) umfassen, wobei eine Bitbreite (S2') der komprimierten fremden Positionsdaten (PD2') kleiner ist als eine Bitbreite (S2) von fremden Positionsdaten (PD2), die eine Position (P2) der fremden Sendevorrichtung (20) anzeigen, wobei die Empfangsvorrichtung (100) weiter umfasst

- eine Steuereinheit (12), die konfiguriert ist, um:

* Positionsdaten (PD1) zu empfangen, die eine Position (P1) der Empfangsvorrichtung (100) angeben, wobei die Positionsdaten (PD1) Breitengraddaten (PD1_LAT), die einen Breitengrad der Empfangsvorrichtung (100) angeben, und Längengraddaten (PD1_LON), die einen Längengrad der Empfangsvorrichtung (100) angeben, umfassen,
* das fremde Datenpaket (D2) zu empfangen, so wie es vom Funkempfänger (14) empfangen wurde, und
* die fremden komprimierten Positionsdaten (PD2') unter Verwendung der Positionsdaten (PD1) zu dekomprimieren und eindeutig zu machen, um die fremden Positionsdaten (PD2) zu rekonstruieren,

wobei die Empfangsvorrichtung (100) so konfiguriert ist, dass sie zum Dekomprimieren der fremden komprimierten Positionsdaten (PD2') unter Verwendung der Positionsdaten (PD1), um die fremden Positionsdaten (PD2) zu rekonstruieren
- fremde Breitengraddaten (PD2_LAT) aus den empfangenen komprimierten fremden Breitengraddaten (PD2'_LAT) unter Verwendung der Breitengraddaten (PD1_LAT) zu dekomprimieren,
- einen Längengradauflösungsteiler (D_LON) unter Verwendung der ausländischen Breitengraddaten (PD2_LAT) zu bestimmen und
- fremde Längengraddaten (PD2_LON) aus den empfangenen komprimierten fremden Längengraddaten (PD2'_LON) unter Verwendung des bestimmten Längengradauflösungsteilers (D_LON) und der Längengraddaten (PD1_LON) zu dekomprimieren.

**19.** Die Empfangsvorrichtung (100) nach Anspruch 18, die so konfiguriert ist, dass sie zur Bestimmung des Längengradauflösungsteilers (D_LON) unter Verwendung der fremden Breitengraddaten (PD2_LAT) den Längengradauflösungsteiler D_LON approximiert als

$$D\_LON = a\_0 + \sum_{n=1}^{N} a\_n \, thr(|PD2\_LAT| - LAT\_n)$$

wobei a_0 eine Konstante ist, a_1...a_N Approximationskoeffizienten sind, LAT_1...LAT_N Breitengrad-Schwellenwerte sind, |...| den Absolutwert seines Arguments zurückgibt und thr() die Schwellenwertfunktion ist, die definiert ist als

$$thr(x) = \begin{cases} x & \text{if } x > 0 \\ 0 & \text{else} \end{cases}$$

und insbesondere wobei N=7 ist, mit a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, und LAT_7=82.

**20.** Ein Verfahren zum drahtlosen Senden von Informationen über ein erstes Flugzeug (1) mittels einer Sendevorrichtung (10), insbesondere nach einem der Ansprüche 1 bis 17, wobei das Verfahren die folgenden Schritte umfasst::

- Bereitstellen der Sendevorrichtung (10) umfassend eine Ortungsvorrichtung (11), eine Steuereinheit (12) und einen Funksender (13),
- mittels der Positionierungsvorrichtung (11) Bestimmen von Positionsdaten (PD1), die eine Position (P1) der Sendevorrichtung (10) angeben, wobei die Positionsdaten (PD1) Breitengraddaten (PD1_LAT), die einen Breitengrad der Sendevorrichtung (10) angeben, und Längengraddaten (PD1_LON), die einen Längengrad der Sendevorrichtung (10) angeben, umfassen
- mit Hilfe der Steuereinheit (12):

  * Empfangen der Positionsdaten (PD1), wie sie von der Positionierungsvorrichtung (11) bestimmt wurden,
  * Bestimmen von komprimierten Positionsdaten (PD1') durch Ausführen einer Skalierungsoperation zum Neuskalieren, einer Rundungsoperation zum Runden und einer Rasterungsoperation zum Projizieren der skalierten und gerundeten Positionsdaten (PD1) auf ein Raster, so dass die komprimierten Positionsdaten (PD1') die Position nur relativ zu einem Ursprung einer jeweiligen Rasterzelle auf mindestens einem der Breitengraddaten (PD1_LAT) und den Längengraddaten (PD1_LON) beibehalten, wobei eine komprimierte Bitbreite (S1') der komprimierten Positionsdaten (PD1') kleiner ist als eine Bitbreite (S1) der Positionsdaten (PD1), und
  * Erzeugen eines Datenpakets (D1), das die komprimierten Positionsdaten (PD1') und eine Kennung (ID1) der Sendevorrichtung (10) umfasst, und

wobei das Verfahren folgende weitere Schritte umfasst:

- Empfangen des erzeugten Datenpakets (D1) mittels des Funksenders (13) und drahtloses Aussenden des empfangenen Datenpakets (D1),

  wobei das gesendete Datenpaket (D1) die zu sendende Information angibt, und
  wobei das Verfahren die folgenden weiteren Schritte umfasst

- Durchführen der Skalierungsoperation an den Breitengraddaten (PD1_LAT) unter Verwendung eines Breitengradauflösungsteilers (D_LAT) und Durchführen der Rasterungsoperation an den Breitengraddaten (PD1_LAT) unter Verwendung eines Breitengradmoduls (m_LAT) am Ergebnis der Skalierungsoperation, so dass die Breitengraddaten (PD1_LAT) komprimiert werden, um die komprimierten Breitengraddaten (PD1'_LAT) zu erhalten, wobei

$$PD1'\_LAT = \frac{\left(PD1\_LAT + \frac{D\_LAT}{2}\right)}{D\_LAT} \bmod m\_LAT$$

wobei D_LAT der Breitengradauflösungsteiler ist, m_LAT der Breitengradmodul ist und mod der Modulo-Operator ist, und

- Durchführen der Skalierungsoperation an den Längengraddaten (PD1_LON) unter Verwendung eines Längengradauflösungsteilers (D_LON) und Durchführen der Rasterungsoperation an den Längengraddaten (PD1_LON) unter Verwendung eines Längenmoduls (m_LON) am Ergebnis der Skalierungsoperation, so dass die Längengraddaten (PD1_LON) komprimiert werden, um die komprimierten Längengraddaten (PD1'_LON) zu erhalten, wobei

$$PD1'\_LON = \frac{\left(PD1\_LON + \frac{D\_LON}{2}\right)}{D\_LON} \bmod m\_LON$$

wobei D_LON der Längengradauflösungsteiler ist, m_LON der Längengradmodul ist und mod der Modulo-Operator ist.

21. Das Verfahren nach Anspruch 20, wobei die Sendevorrichtung (10) weiter einen Funkempfänger (14) umfasst und wobei das Verfahren einen weiteren Schritt umfasst, um

- mittels des Funkempfängers (14) ein fremdes Datenpaket (D2), wie es von einer fremden Sendevorrichtung (20) nach einem der Ansprüche 1 bis 17 gesendet wird, zu empfangen, wobei das fremde Datenpaket (D2) Informationen anzeigt, die ein zweites Flugzeug (2) betreffen,

wobei das fremde Datenpaket (D2) fremde komprimierte Positionsdaten (PD2') umfasst, wobei eine Bitbreite (S2') der fremden komprimierten Positionsdaten (PD2') kleiner ist als eine Bitbreite (S2) von fremden Positionsdaten (PD2), die eine Position (P2) der fremden Sendevorrichtung (20) anzeigen, und wobei das Verfahren weitere Schritte umfasst

- Dekomprimieren und eindeutig Machen der fremden komprimierten Positionsdaten (PD2') unter Verwendung der Positionsdaten (PD1), um die fremden Positionsdaten (PD2) zu rekonstruieren.

22. Verfahren nach Anspruch 21, wobei der Schritt des Dekomprimierens der fremden komprimierten Positionsdaten (PD2') unter Verwendung der Positionsdaten (PD1) zum Rekonstruieren der fremden Positionsdaten (PD2) umfasst

- Dekomprimieren von fremden Breitengraddaten (PD2_LAT) aus den empfangenen komprimierten fremden Breitengraddaten (PD2'_LAT) unter Verwendung der Breitengraddaten (PD1_LAT),
- Bestimmen des Längengradauflösungsteilers (D_LON) unter Verwendung der fremden Breitengraddaten (PD2_LAT), und
- Dekomprimieren der fremden Längengraddaten (PD2_LON) aus den empfangenen komprimierten fremden Längengraddaten (PD2'_LON) unter Verwendung des bestimmten Längengradauflösungsteilers (D_LON) und der Längengraddaten (PD1_LON).

23. Ein Verfahren zum drahtlosen Empfangen von Informationen die ein zweites Flugzeug (2) betreffen, mittels einer Empfangsvorrichtung (100), insbesondere nach einem der Ansprüche 18 bis 19, wobei das Verfahren die folgenden Schritte umfasst:

- Bereitstellen der Empfangsvorrichtung (100) mit einer Steuereinheit (12) und einem Funkempfänger (14),
- mittels des Funkempfängers (14) Empfangen eines fremden Datenpakets (D2), wie es von einer fremden Sendevorrichtung (20) nach einem der Ansprüche 1 bis 17 gesendet wird, wobei das fremde Datenpaket (D2) die das zweite Flugzeug (2) betreffende Information angibt,
wobei das fremde Datenpaket (D2) komprimierte fremde Positionsdaten (PD2') umfasst, wobei die komprimierten fremden Positionsdaten (PD2') komprimierte fremde Breitengraddaten (PD2'_LAT) und komprimierte fremde Längengraddaten (PD2' _LON) umfassen, wobei eine Bitbreite (S2') der komprimierten fremden Positionsdaten (PD2') kleiner ist als eine Bitbreite (S2) von fremden Positionsdaten (PD2), die eine Position (P2) der fremden Sendevorrichtung (20) anzeigen, und
- mit Hilfe der Steuereinheit (12):

* Empfangen von Positionsdaten (PD1), die eine Position (P1) der Empfangsvorrichtung (100) angeben, wobei die Positionsdaten (PD1) Breitengraddaten (PD1_LAT), die einen Breitengrad der Empfangsvorrichtung (100) angeben, und Längengraddaten (PD1_LON), die einen Längengrad der Empfangsvorrichtung (100) angeben, umfassen,
* Empfangen des fremden Datenpakets (D2), wie es von dem Funkempfänger (14) empfangen wird, und
* Dekomprimieren und eindeutig Machen der fremden komprimierten Positionsdaten (PD2') unter Verwendung der Positionsdaten (PD1), um die fremden Positionsdaten (PD2) zu rekonstruieren,

wobei der Schritt des Dekomprimierens der fremden komprimierten Positionsdaten (PD2') unter Verwendung der Positionsdaten (PD1) zum Rekonstruieren der fremden Positionsdaten (PD2) umfasst
- Dekomprimieren fremder Breitengraddaten (PD2_LAT) aus den empfangenen komprimierten fremden Breitengraddaten (PD2'_LAT) unter Verwendung der Breitengraddaten (PD1_LAT),
- Bestimmen eines Längengradauflösungsteilers (D_LON) unter Verwendung der fremden Breitengraddaten (PD2_LAT), und
- Dekomprimieren fremder Längengraddaten (PD2_LON) aus den empfangenen komprimierten fremden Längengraddaten (PD2'_LON) unter Verwendung des bestimmten Längengradauflösungsteilers (D_LON) und der Längengraddaten (PD1_LON).

24. Ein Computerprogrammprodukt

das Anweisungen umfasst, um eine Sendevorrichtung nach einem der Ansprüche 1 bis 17 zu veranlassen, die Schritte eines Verfahrens nach einem der Ansprüche 20 bis 22 auszuführen, oder
das Anweisungen umfasst, um eine Empfangsvorrichtung nach einem der Ansprüche 18 bis 19 zu veranlassen, die Schritte eines Verfahrens nach Anspruch 23 auszuführen.

25. Computerlesbares Medium, auf dem das Computerprogrammprodukt nach Anspruch 24 gespeichert ist.

26. Ein System zur Wahrnehmung des Flugzeugverkehrs und/oder zur Vermeidung von Flugzeugkollisionen, das Folgendes umfasst

- eine erste Sendevorrichtung (10) nach einem der Ansprüche 1 bis 17 an einem ersten Luftfahrzeug (1) zum drahtlosen Senden von Informationen, die das erste Luftfahrzeug (1) betreffen, und mindestens eines der folgenden Elemente
- eine zweite Sendevorrichtung (20) nach einem der Ansprüche 1 bis 17 an einem zweiten Luftfahrzeug (2) zum drahtlosen Senden von Informationen, die das zweite Luftfahrzeug (2) betreffen, und
- eine Empfangsvorrichtung (20) nach einem der Ansprüche 18 bis 19 zum Empfangen der von der ersten Sendevorrichtung (10) gesendeten, das erste Flugzeug (1) betreffenden Informationen.

## Revendications

1. Un dispositif d'émission (10) pour émettre sans fil des informations relatives à un premier aéronef (1), le dispositif d'émission (10) comprenant

- un dispositif de positionnement (11) configuré pour déterminer des données de position (PD1) indiquant une position (P1) du dispositif d'émission (10), les données de position (PD1) comprenant des données de latitude (PD1_LAT) indiquant une latitude du dispositif d'émission (10) et des données de longitude (PD1_LON) indiquant une longitude du dispositif d'émission (10)
- une unité de commande (12) configurée pour :

* recevoir les données de position (PD1) telles que déterminées par le dispositif de positionnement (11),
* déterminer des données de position comprimées (PD1') en exécutant une opération de mise à l'échelle pour une nouvelle mise à l'échelle, une opération d'arrondi pour un arrondi et une opération de tramage pour projeter les données de position mises à l'échelle et arrondies (PD1) sur un tramage, de sorte que les données de position comprimées (PD1') conservent la position uniquement par rapport à une origine d'une cellule de grille respective sur les données de latitude (PD1_LAT) et les données de longitude (PD1_LON), une largeur de bit comprimée (S1') des données de position comprimées (PD1') étant inférieure à une largeur de bit (S1) des données de position (PD1), et

* générer un paquet de données (D1) comprenant les données de position comprimées (PD1') et un identifiant (ID1) du dispositif d'émission (10),

dans lequel le dispositif d'émission (10) comprend en outre
- un dispositif d'émission radio (13) configuré pour recevoir le paquet de données généré (D1) et pour transmettre sans fil le paquet de données reçu (D1), et

dans lequel le paquet de données transmis (D1) indique les informations à transmettre, et
dans lequel le dispositif d'émission (10) est en outre configuré, afin de déterminer les données de position comprimées (PD1'),

- pour effectuer l'opération de mise à l'échelle sur les données de latitude (PD1_LAT) en utilisant un diviseur de résolution de latitude (D_LAT) et pour effectuer l'opération de tramage sur les données de latitude (PD1_LAT) en utilisant un module de latitude (m_LAT) sur le résultat de l'opération de mise à l'échelle, de sorte que les données de latitude (PD1_LAT) sont comprimées pour obtenir les données de latitude comprimées (PD1'_LAT), où

$$PD1'\_LAT = \frac{\left(PD1\_LAT + \frac{D\_LAT}{2}\right)}{D\_LAT} \bmod m\_LAT$$

où D_LAT est le diviseur de résolution en latitude, m_LAT est le module en latitude et mod est l'opérateur modulo, et
- pour effectuer l'opération de mise à l'échelle sur les données de longitude (PD1_LON) en utilisant un diviseur de résolution de longitude (D_LON) et pour effectuer l'opération de tramage sur les données de longitude (PD1_LON) en utilisant un module de longitude (m_LON) sur le résultat de l'opération de mise à l'échelle, de sorte que les données de longitude (PD1_LON) sont comprimées pour obtenir les données de longitude comprimées (PD1'_LON), où

$$PD1'\_LON = \frac{\left(PD1\_LON + \frac{D\_LON}{2}\right)}{D\_LON} \bmod m\_LON$$

où D_LON est le diviseur de résolution en longitude, m_LON est le module en longitude et mod est l'opérateur modulo.

2. Le dispositif d'émission (10) selon la revendication 1, configuré pour déterminer la position (P1) de sorte que les données de position (PD1) comprennent en outre des données d'altitude (PD1_ALT) indiquant une altitude du dispositif d'émission (10),
et en particulier dans lequel le dispositif de transmission (10) est configuré pour déterminer les données de position comprimées (PD1') de telle sorte que les données de position comprimées (PD1') comprennent les données d'altitude (PD1_ALT).

3. Le dispositif d'émission (10) selon l'une des revendications précédentes, configuré pour

- déterminer le module de latitude (m_LAT) en utilisant une largeur de bit de latitude comprimée (S1'_LAT) des données de position latitudinale comprimées (PD1'_LAT), et notamment dans lequel le module de latitude $m\_LAT = 2^{S1'\_LAT}$, et/ou
- déterminer le module de longitude (m_LON) en utilisant une largeur de bit de longitude comprimée (S1'_LON) de données de position comprimées en longitude (PD1'_LON), et notamment dans lequel le module de longitude $m\_LON = 2^{S1'\_LON}$.

4. Le dispositif d'émission (10) selon l'une des revendications précédentes, configuré, afin de déterminer les données de position comprimées (PD1'),

- pour déterminer le diviseur de résolution en latitude D_LAT en utilisant une taille de trame minimale requise (G_min) pour le tramage et la largeur de bit en latitude comprimée (S1'_LAT) des données de position comprimées (PD1'_LAT),

et en particulier où

$$D\_LAT = \text{ceil}\left(\frac{G\_min}{m\_LAT\ res\_raw}\right)$$

où G_min est la taille de trame minimale requise pour le tramage, $m\_LAT = 2^{S1'\_LAT}$ est le module de latitude, res_raw est une résolution des données de latitude (PD1_LAT) et ceil() est la fonction de plafonnement.

5. Le dispositif d'émission (10) selon la revendication 4, qui est configuré, afin de déterminer les données de position comprimées (PD1'),

- pour déterminer le diviseur de résolution en longitude D_LON en fonction des données en longitude (PD1_LAT),

et en particulier où

$$D\_LON = \text{ceil}\left(\frac{G\_min/\cos(PD1\_LAT)}{m\_LAT\ res\_raw}\right)$$

où PD1_LAT sont les données de latitude et cos() est la fonction cosinus.

6. Le dispositif d'émission (10) selon la revendication 5, configuré, afin de déterminer les données de position comprimées (PD1'),

- pour approximer le diviseur de résolution en longitude D_LON comme suit

$$D\_LON = a\_0 + \sum_{n=1}^{N} a\_n\ \text{thr}(|PD1\_LAT| - LAT\_n)$$

où a_0 est une constante, a_1...a_N sont des coefficients d'approximation, LAT_1 ... LAT_N sont des valeurs seuils de latitude, | ...| renvoie la valeur absolue de son argument et thr() est la fonction de seuil définie par

$$\text{thr}(x) = \begin{cases} x & \text{if } x > 0 \\ 0 & \text{else} \end{cases}$$

et en particulier où N=7, avec $a\_0=52$, $a\_1=2^{-1}$, $a\_2=2^0$, $a\_3=2^1$, $a\_4=2^2$, $a\_5=2^3$, $a\_6=2^4$, $a\_7=2^5$, $LAT\_1=12$, $LAT\_2=39$, $LAT\_3=56$, $LAT\_4=57$, $LAT\_5=73$, $LAT\_6=79$, et $LAT\_7=82$.

7. Le dispositif d'émission (10) selon l'une des revendications précédentes, configuré pour effectuer l'opération de tramage de sorte que la taille de trame (G) de l'opération de tramage soit supérieure à une portée d'émission du dispositif d'émission (10), notamment d'un facteur 2 ou plus.

8. Le dispositif d'émission (10) selon l'une des revendications précédentes, configuré pour générer le paquet de données (D1) de telle sorte que le paquet de données (D1) comprend une section d'en-tête et une section de charge utile, et en particulier dans lequel la section d'en-tête est non chiffrée et/ou dans lequel la section de charge utile est chiffrée.

9. Le dispositif d'émission (10) selon la revendication 8, configuré pour chiffrer la portion de charge utile du paquet de données (D1) au moyen d'un algorithme cryptographique symétrique,

et, en particulier, dans lequel le dispositif de transmission (10) est configuré pour utiliser un nonce cryptographique basé sur la section d'en-tête du paquet de données (D1), basé sur un horodatage et basé sur une constante secrète pour le cryptage.

10. Le dispositif d'émission (10) selon l'une des revendications précédentes, configuré pour générer le paquet de données (D1) de sorte que le paquet de données (D1) comprend au moins l'un des éléments suivants

- un horodatage, notamment dans la section de charge utile du paquet de données,
- une version de protocole de paquet, en particulier dans la section d'en-tête du paquet de données, et
- une version de protocole de paquet maximale prise en charge, en particulier dans la section d'en-tête du paquet de données.

11. Le dispositif d'émission (10) selon l'une des revendications précédentes, configuré pour

- déterminer des données de position actualisées de manière répétée (PD1) indiquant une position actualisée (P1) du dispositif de transmission (10),
- déterminer des données de position comprimées mises à jour de manière répétée (PD1') en utilisant au moins une partie des données de position mises à jour (PD1), et
- générer et transmettre de manière répétée un paquet de données mis à jour (D1) contenant les données de position comprimées mises à jour (PD1') et l'identifiant (ID1) du dispositif de transmission (10)

et en particulier dans lequel chaque intervalle de temps entre deux telles mises à jour successives est compris entre 0,1 s et 5 s, en particulier entre 0,5 s et 1 s, et notamment 1 s.

12. Le dispositif d'émission (10) selon l'une des revendications précédentes, configuré pour générer le paquet de données (D1) de sorte que le paquet de données (D1) comprenne un couple c1 = (e1, m1), où un exposant e1 est un entier naturel et une mantisse m1 est un entier naturel,

la paire c1 indiquant une valeur v1,
où la mantisse m a une largeur de bit de $N_{m1}$ et où l'exposant e a une largeur de bit de $N_{e1}$,
où

$$v1 = 2^{e1} * (2^{Nm1} + m1) - 2^{Nm1}$$

et dans lequel les largeurs de bit $N_{m1}$ et $N_{e1}$ sont choisies de telle sorte qu'une largeur de bit totale $N_1 = N_{e1} + N_{m1}$ de la paire c1 soit inférieure à une largeur de bit totale de la valeur v1.

13. Le dispositif d'émission (10) selon la revendication 12, configuré pour générer le paquet de données (D1) de sorte que la paire c1 indique des données de vitesse (VD1) du premier aéronef (1),
notamment dans lequel la valeur v1 indique une grandeur vectorielle de vitesse du premier aéronef (1).

14. Le dispositif d'émission (10) selon l'une des revendications précédentes, comprenant en outre un récepteur radio (14) configuré pour recevoir un paquet de données étranger (D2) émis par un dispositif d'émission étranger (20) selon l'une des revendications précédentes, le paquet de données étranger (D2) indiquant des informations concernant un deuxième aéronef (2),

dans lequel le paquet de données étranger (D2) comprend des données de position comprimées étrangères (PD2'), dans lequel une largeur de bit (S2') des données de position comprimées étrangères (PD2') est inférieure à une largeur de bit (S2) de données de position étrangères (PD2) indiquant une position (P2) du dispositif d'émission étranger (20), et
dans lequel le dispositif de transmission (10) est configuré pour
- décompresser les données de position comprimées étrangères (PD2') en utilisant les données de position (PD1) et les rendre uniques afin de reconstruire les données de position étrangères (PD2).

15. Le dispositif de transmission (10) selon la revendication 14, qui est configuré, afin de reconstruire les données de position étrangères comprimées (PD2') pour décomprimer les données de position étrangères (PD1) en utilisant les données de position étrangères (PD2), pour :

- décompresser les données de latitude étrangères (PD2_LAT) à partir des données de latitude étrangères comprimées reçues (PD2'_LAT) en utilisant les données de latitude (PD1_LAT),
- déterminer le diviseur de résolution en longitude (D_LON) en utilisant les données de latitude étrangère (PD2_LAT), et
- décompresser les données de longitude étrangères (PD2_LON) à partir des données de longitude étrangères comprimées reçues (PD2' _LON) en utilisant le diviseur de résolution en longitude déterminé (D_LON) et les données de longitude (PD1_LON).

16. Le dispositif de transmission (10) selon la revendication 15, qui est configuré, afin de déterminer le diviseur de résolution en longitude (D_LON) en utilisant les données de latitude étrangères (PD2_LAT), pour approximer le diviseur de résolution en longitude D_LON comme suit

$$D\_LON = a\_0 + \sum_{n=1}^{N} a\_n \, thr(|PD2\_LAT| - LAT\_n)$$

où a_0 est une constante, a_1...a_N sont des coefficients d'approximation, LAT_1...LAT_N sont des valeurs seuils de latitude, |...| renvoie la valeur absolue de son argument et thr() est la fonction de seuil définie par

$$thr(x) = \begin{cases} x & \text{if } x > 0 \\ 0 & \text{else} \end{cases}$$

et en particulier où N=7, avec a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, et LAT_7=82.

17. Le dispositif d'émission (10) selon l'une des revendications 14 à 16, configuré pour calculer une probabilité de collision et/ou visualiser des informations indicatives d'une perception de la situation entre le premier aéronef (1) et le deuxième aéronef (2), sur la base des informations concernant le premier aéronef (1) et sur la base des informations reçues concernant le deuxième aéronef (2).

18. Un dispositif de réception (100) comprenant :

- un récepteur radio (14) configuré pour recevoir un paquet de données étranger (D2), le paquet de données étranger (D2) indiquant des informations concernant un deuxième avion (2),

dans lequel le paquet de données étrangères (D2) comprend des données de position étrangères comprimées (PD2'), les données de position étrangères comprimées (PD2') comprenant des données de latitude étrangères comprimées (PD2'_LAT) et des données de longitude étrangères comprimées (PD2' _LON), dans lequel une largeur de bit (S2') des données de position étrangères comprimées (PD2') est inférieure à une largeur de bit (S2) de données de position étrangères (PD2) indiquant une position (P2) du dispositif d'émission étranger (20), le dispositif de réception (100) comprenant en outre

- une unité de commande (12) configurée pour :

* recevoir des données de position (PD1) indiquant une position (P1) du dispositif de réception (100), les données de position (PD1) comprenant des données de latitude (PD1_LAT) indiquant une latitude du dispositif de réception (100) et des données de longitude (PD1_LON) indiquant une longitude du dispositif de réception (100),
* recevoir le paquet de données étranger (D2) tel qu'il a été reçu par le récepteur radio (14), et
* décompresser les données de position comprimées étrangères (PD2') en utilisant les données de position (PD1) et les rendre uniques afin de reconstruire les données de position étrangères (PD2),

dans lequel le dispositif de réception (100) est configuré, afin de décompresser les données de position comprimées étrangères (PD2') en utilisant les données de position (PD1) afin de reconstruire les données de position étrangères (PD2), pour
- décompresser des données de latitude étrangères (PD2_LAT) à partir des données de latitude étrangères comprimées reçues (PD2'_LAT) en utilisant les données de latitude (PD1_LAT),
- déterminer un diviseur de résolution en longitude (D_LON) en utilisant les données de latitude étrangères (PD2_LAT), et
- décompresser des données de longitude étrangères (PD2_LON) à partir des données de longitude étrangères comprimées reçues (PD2'_LON) en utilisant le diviseur de résolution en longitude déterminé (D_LON) et les données de longitude (PD1_LON).

19. Le dispositif de réception (100) selon la revendication 18, qui est configuré, afin de déterminer le diviseur de résolution en longitude (D_LON) en utilisant les données de latitude étrangères (PD2_LAT), pour approximer le diviseur de résolution en longitude D_LON comme suit

$$D\_LON = a\_0 + \sum_{n=1}^{N} a\_n \, thr(|PD2\_LAT| - LAT\_n)$$

où a_0 est une constante, a_1...a_N sont des coefficients d'approximation, LAT_1...LAT_N sont des valeurs seuils de latitude, |...| renvoie la valeur absolue de son argument et thr() est la fonction de seuil définie par

$$thr(x) = \begin{cases} x & \text{if } x > 0 \\ 0 & \text{else} \end{cases}$$

et en particulier où N=7, avec a_0=52, a_1=$2^{-1}$, a_2=$2^0$, a_3=$2^1$, a_4=$2^2$, a_5=$2^3$, a_6=$2^4$, a_7=$2^5$, LAT_1=12, LAT_2=39, LAT_3=56, LAT_4=57, LAT_5=73, LAT_6=79, et LAT_7=82.

20. Un procédé de transmission sans fil d'informations concernant un premier aéronef (1) au moyen d'un dispositif d'émission (10), notamment selon l'une des revendications 1 à 17, ledit procédé comprenant les étapes suivantes :

- fournir le dispositif d'émission (10) comprenant un dispositif de positionnement (11), une unité de commande (12) et un d'émission radio (13),
- au moyen du dispositif de positionnement (11), déterminer des données de position (PD1) indiquant une position (P1) du dispositif d'émission (10), les données de position (PD1) comprenant des données de latitude (PD1_LAT) indiquant une latitude du dispositif d'émission (10) et des données de longitude (PD1_LON) indiquant une longitude du dispositif d'émission (10)
- à l'aide de l'unité de contrôle (12) :

* recevoir les données de position (PD1) telles qu'elles ont été déterminées par le dispositif de positionnement (11),
* déterminer des données de position comprimées (PD1') en exécutant une opération de mise à l'échelle pour une nouvelle mise à l'échelle, une opération d'arrondi pour un arrondi et une opération de tramage pour projeter les données de position mises à l'échelle et arrondies (PD1) sur une trame, de sorte que les données de position comprimées (PD1') conservent la position uniquement par rapport à une origine d'une cellule de grille respective sur au moins l'une des données de latitude (PD1_LAT) et des données de longitude (PD1_LON), une largeur de bit comprimée (S1') des données de position comprimées (PD1') étant inférieure à une largeur de bit (S1) des données de position (PD1), et
* générer un paquet de données (D1) comprenant les données de position comprimées (PD1') et un identifiant (ID1) du dispositif de transmission (10), et

le procédé comprenant les étapes supplémentaires suivantes :

- recevoir le paquet de données généré (D1) au moyen de l'd'émission radio (13) et l'émission sans fil du paquet de données reçu (D1),

le paquet de données envoyé (D1) indiquant les informations à envoyer, et
le procédé comprenant les étapes supplémentaires suivantes

- effectuer l'opération de mise à l'échelle sur les données de latitude (PD1_LAT) en utilisant un diviseur de résolution de latitude (D_LAT) et effectuer l'opération de tramage sur les données de latitude (PD1_LAT) en utilisant un module de latitude (m_LAT) sur le résultat de l'opération de mise à l'échelle de sorte que les données de latitude (PD1_LAT) soient comprimées pour obtenir les données de latitude comprimées (PD1' _LAT), où

$$PD1'\_LAT = \frac{\left(PD1\_LAT + \frac{D\_LAT}{2}\right)}{D\_LAT} \mod m\_LAT$$

où D_LAT est le diviseur de résolution en latitude, m_LAT est le module en latitude et mod est l'opérateur modulo, et

- effectuer l'opération de mise à l'échelle sur les données de longitude (PD1_LON) en utilisant un diviseur de résolution de longitude (D_LON) et effectuer l'opération de tramage sur les données de longitude (PD1_LON) en utilisant un module de longitude (m_LON) sur le résultat de l'opération de mise à l'échelle, de sorte que les données de longitude (PD1_LON) sont comprimées pour obtenir les données de longitude comprimées (PD1' _LON), où

$$PD1'\_LON = \frac{\left(PD1\_LON + \frac{D\_LON}{2}\right)}{D\_LON} \mod m\_LON$$

où D_LON est le diviseur de résolution en longitude, m_LON est le module en longitude et mod est l'opérateur modulo.

21. Le procédé selon la revendication 20, dans lequel le dispositif d'émission (10) comprend en outre un récepteur radio (14) et dans lequel le procédé comprend une étape supplémentaire consistant à

- recevoir, au moyen du récepteur radio (14), un paquet de données étranger (D2) tel qu'émis par un dispositif d'émission étranger (20) selon l'une des revendications 1 à 17, le paquet de données étranger (D2) étant indicatif d'informations concernant un deuxième aéronef (2),

dans lequel le paquet de données étranger (D2) comprend des données de position comprimées étrangères (PD2'), une largeur de bit (S2') des données de position comprimées étrangères (PD2') étant inférieure à une largeur de bit (S2) de données de position étrangères (PD2) indiquant une position (P2) du dispositif d'émission étranger (20),
et dans lequel le procédé comprend les étapes supplémentaires consistant à

- décompresser et rendre unique la donnée de position comprimée étrangère (PD2') en utilisant la donnée de position (PD1) pour reconstruire la donnée de position étrangère (PD2).

22. Procédé selon la revendication 21, dans lequel l'étape de décompression des données de position comprimées étrangères (PD2') en utilisant les données de position (PD1) pour reconstruire les données de position étrangères (PD2) comprend

- décompresser les données de latitude étrangères (PD2_LAT) à partir des données de latitude étrangères comprimées reçues (PD2'_LAT) en utilisant les données de latitude (PD1_LAT),
- déterminer le diviseur de résolution en longitude (D_LON) en utilisant les données de latitude étrangères (PD2_LAT), et
- décompresser les données de longitude étrangères (PD2_LON) à partir des données de longitude étrangères comprimées reçues (PD2' _LON) en utilisant le diviseur de résolution de longitude déterminé (D_LON) et les données de longitude (PD1_LON).

23. Un procédé de réception sans fil d'informations concernant un deuxième aéronef (2) au moyen d'un dispositif de réception (100), notamment selon l'une des revendications 18 à 19, le procédé comprenant les étapes suivantes :

- fournir le dispositif de réception (100) comprenant une unité de commande (12) et un récepteur radio (14),
- recevoir, au moyen du récepteur radio (14), un paquet de données étranger (D2) tel qu'émis par un dispositif d'émission étranger (20) selon l'une des revendications 1 à 17, le paquet de données étranger (D2) indiquant l'information concernant le deuxième aéronef (2),

dans lequel le paquet de données étranger (D2) comprend des données de position étrangères comprimées (PD2'), les données de position étrangères comprimées (PD2') comprenant des données de latitude étrangères comprimées (PD2'_LAT) et des données de longitude étrangères comprimées (PD2' _LON), dans lequel une largeur de bit (S2') des données de position étrangères comprimées (PD2') est inférieure à une largeur de bit (S2) de données de position étrangères (PD2) indiquant une position (P2) du dispositif d'émission étranger (20), et
- à l'aide de l'unité de commande (12) :

   * recevoir des données de position (PD1) indiquant une position (P1) du dispositif de réception (100), les données de position (PD1) comprenant des données de latitude (PD1_LAT) indiquant une latitude du dispositif de réception (100) et des données de longitude (PD1_LON) indiquant une longitude du dispositif de réception (100),
   * recevoir le paquet de données étranger (D2) tel qu'il est reçu par le récepteur radio (14), et
   * décompresser et rendre uniques les données de position comprimées étrangères (PD2') en utilisant les données de position (PD1) pour reconstruire les données de position étrangères (PD2),

dans lequel l'étape de décompression des données de position comprimées étrangères (PD2') en utilisant les données de position (PD1) pour reconstruire les données de position étrangères (PD2) comprend
- décompresser des données de latitude étrangères (PD2_LAT) à partir des données de latitude étrangères comprimées reçues (PD2'_LAT) en utilisant les données de latitude (PD1_LAT),
- déterminer un diviseur de résolution en longitude (D_LON) en utilisant les données de latitude étrangères (PD2_LAT), et
- décompresser des données de longitude étrangères (PD2_LON) à partir des données de longitude étrangères comprimées reçues (PD2'_LON) en utilisant le diviseur de résolution en longitude déterminé (D_LON) et les données de longitude (PD1_LON).

24. Un produit programme d'ordinateur

   comprenant des instructions pour amener un dispositif d'émission selon l'une des revendications 1 à 17 à exécuter les étapes d'un procédé selon l'une des revendications 20 à 22, ou
   comprenant des instructions pour amener un dispositif de réception selon l'une des revendications 18 à 19 à exécuter les étapes d'un procédé selon la revendication 23.

25. Un support lisible par ordinateur sur lequel est stocké le produit programme d'ordinateur selon la revendication 24.

26. Un système de perception du trafic aérien et/ou de prévention des collisions d'aéronefs, comprenant

   - un premier dispositif d'émission (10) selon l'une des revendications 1 à 17, sur un premier aéronef (1), pour l'émission sans fil d'informations concernant le premier aéronef (1), et au moins un des éléments suivants
   - un deuxième dispositif d'émission (20) selon l'une des revendications 1 à 17 sur un deuxième aéronef (2) pour l'émission sans fil d'informations concernant le deuxième aéronef (2), et
   - un dispositif de réception (20) selon l'une des revendications 18 à 19 pour recevoir les informations émises par le premier dispositif d'émission (10) et concernant le premier aéronef (1).

Quantization Step

**Fig. 1b**

Avg. Quantization Error %

**Fig. 1c**

**Fig. 1a**

**Fig. 2**

**Fig. 5**

a)

Nominal longitude resolution divider at latitude

b)

Nominal longitudinal grid size at latitude

c)

Nominal longitudinal resolution at latitude

Fig. 3

a)

Longitude resolution divider at latitude, nominal and approximated

b)

Longitudinal grid size at latitude

c)

Longitudinal resolution at latitude

Fig. 4

GPS

GPS

GPS

D2(PD2', ID2)

D1(PD1', ID1)

P2

20

1

P1

2

10

D3(PD3', ID3)

P3

D1, D2, D3

30

3

40

**Fig. 6**

**Fig. 7**

**Fig. 8**

**REFERENCES CITED IN THE DESCRIPTION**

**Patent documents cited in the description**

- US 20210035454 A1
- US 20130036238 A1
- US 5450329 A
- EP 2021074358 W

**Non-patent literature cited in the description**

- ADS-B based real-time air traffic monitoring system. **VARGA MIHALY et al.** 38th International Conference on Telecommunications and Signal Processing (TSP). IEEE, 09 July 2015, 215-219